# EUROPEAN PATENT SPECIFICATION

(11) **EP 0 717 093 B1**
(45) Date of publication and mention of the grant of the patent: **05.04.2000**
(21) Application number: 95119355.6
(22) Date of filing: 08.12.1995
(51) Int. Cl.: C09K 19/42, C09K 19/44, C09K 19/46

(54) **Liquid crystal compositions and liquid crystal display elements**
Flüssigkristallzusammensetzungen und Flüssigkristallanzeigeelemente
Compositions cristallines liquides et élément d'affichage à cristaux liquides

(30) Priority: 12.12.1994 JP 33204694
(43) Date of publication of application: 19.06.1996
(73) Proprietor: CHISSO CORPORATION, Osaka-shi, Osaka-fu 530 (JP)
(72) Inventor: Sawada, Shinichi, Ichihara-shi, Chiba-ken (JP); Nakagawa, Etsuo, Ichihara-shi, Chiba-ken (JP)
(74) Representative: Türk - Gille - Hrabal - Struck

(56) References cited:
- EP-A- 0 282 300
- EP-A- 0 325 796
- EP-A- 0 411 511
- EP-A- 0 481 293
- EP-A- 0 681 022
- WO-A-91/19772

## Description

### FIELD OF THE INVENTION

This invention relates to a nematic liquid crystal composition comprising at least one chiral additive provided in a closed cell composed of two substrates having transparent electrodes, and to a liquid crystal display element using the composition. More particularly, it relates to a liquid crystal composition suitable for a supertwisted nematic mode, and to a liquid crystal display element using the composition.

### BACKGROUND OF THE INVENTION

As a display mode for a liquid crystal display element (LCD), various modes have been proposed such as twisted nematic (TN) mode, supertwisted nematic (STN) mode, active matrix (AM-LCD) mode, etc., which have been put to practical use. Of these practical modes, the supertwisted nematic mode proposed by T. J. Scheffer, et al. (Appl. Phy. Lett., 45(10), 1021 (1984)), wherein the orientation of liquid crystal molecules in the upper and lower substrates is twisted at 180 - 270° , has been adopted for the LCD of personal computers, word processors, etc. A further improvement in various characteristics has been required in the STN mode.

The liquid crystal composition used for the STN display element has been required to have the following characteristics:
(1) The voltage-transmittance characteristics (steepness) should be steep in order to increase a contrast by liquid crystal display elements;
(2) A phase transition temperature (clearing point) in a nematic isotropic phase should be higher for reducing changes in color development due to the temperature-dependency of the optical anisotropy (Δn); and
(3) A viscosity (η) should be lower in order to reduce a response time as short as possible.

Of these characteristics, the improvement of the above (1) and (3) has become important, as the measure for colorization and animation has been strongly required in recent years.

Despite a continuing investigation of the liquid crystal composition having such characteristics, any further improvement is still desired.

### DETAILED DESCRIPTION OF THE INVENTION

A primary object of this invention is to provide a liquid crystal composition having excellent voltage-transmittance characteristics (steepness) especially for meeting colorization and also having a low viscosity to meet a high response rate, while satisfying various characteristics required for the STN display mode.

This invention provides a liquid crystal composition which comprises:
(1) as a first component, at least one of compounds of formula (I) 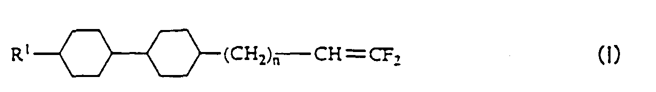 wherein R¹ represents an alkyl group of 1 - 10 carbons or an alkenyl group of 2 - 10 carbons, wherein one -CH₂-group or two or more -CH₂- groups not adjacent to each other may be substituted by -O-, and n represents an integer of 0 - 20;
(2) as a second component, at least one of compounds of formula (II-a), (II-b) or (II-c) 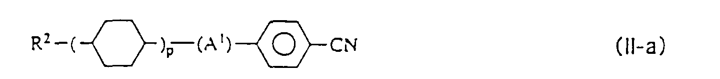 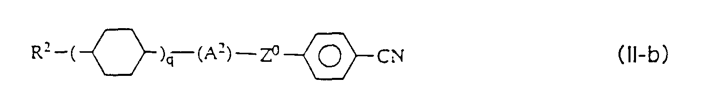 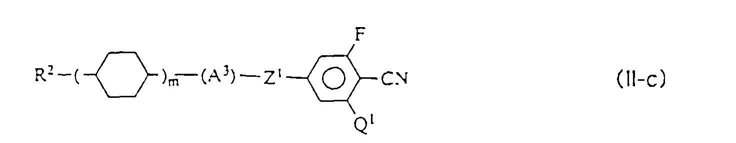 wherein R² represents an alkyl group of 1 - 10 carbons or an alkenyl group of 2 - 10 carbons, wherein one -CH₂-group or two or more -CH₂- groups not adjacent to each other may be substituted by -O-; Z⁰ represents -COO- or -CH₂CH₂-, Z¹ represents -CH₂CH₂-, -COO- or a single bond; Q¹ represents H or F; A¹ represents trans-1,4-cyclohexylene, 1,4-phenylene or 1,3-dioxane-2,5-diyl (attached at the 2-position thereof to the cyanophenyl ring moiety); A² and A³ independently represent trans-1,4-cyclohexylene or 1,4-phenylene; and p, q and m independently represent 0 or 1; and
(3) as a third component, at least one of compounds of formula (III) or (IV)

   R³-(B)-Z²-(C)-R⁴ (III)

   wherein R³ and R⁴ independently represent an alkyl group of 1 - 10 carbons or an alkenyl group of 2 - 8 carbons, wherein one -CH₂- group or two or more -CH₂- groups may be substituted by -O-; B represents trans-1,4-cyclohexylene, pyrimidine-2,5-diyl (attached at the 2-position thereof to the group Z²) or 1,4-phenylene; C represents trans-1,4-cyclohexylene or 1,4-phenylene; and Z² represents -C≡C-, -COO-, -CH₂CH₂-, -CH=CH-, -CF=CF- or a single bond; or

   R⁵-(D)-Z³-(E)-Z⁴-(G)-R⁶ (IV)

   wherein R⁵ represents an alkyl group of 1 - 10 carbons or an alkenyl group of 2 - 10 carbons, wherein one -CH₂-group or two or more -CH₂- groups not adjacent to each other may be substituted by -O-; R⁶ represents an alkyl group, an alkoxy group or an alkoxymethyl group, each having 1 - 10 carbons; D represents trans-1,4-cyclohexylene or pyrimidine-2,5-diyl (attached at the 2-position thereof to the group Z³); E represents trans-1,4-cyclohexylene or 1,4-phenylene wherein H is optionally substituted with F at one of the 2-, 3-, 5- and 6-positions thereof; G represents trans-1,4-cyclohexylene or 1,4-phenylene; Z³ represents -CH₂CH₂- or a single bond and; Z⁴ represents -C≡C-, -COO-, -CH=CH- or a single bond, with the proviso, that E and G do not represent 1,4-phenylene simultaneously when D represents trans 1,4-cyclohexylene and both Z³ and Z⁴ represent single bonds.

In one embodiment of this invention, the first component comprises 3 - 50% by weight, the second component comprises 10 - 70% by weight and the third component comprises 10 - 70% by weight, based on a total weight of the liquid crystal composition.

In another aspect of this invention, the liquid crystal composition further comprises as a fourth component, at least one of compounds of formula (V) or (VI) 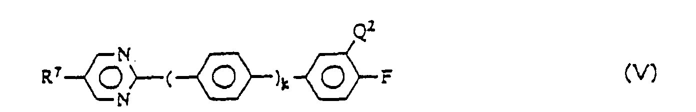 wherein R⁷ represents an alkyl group of 1 - 10 carbons, Q² represents H or F; and k represents 0 or 1 or 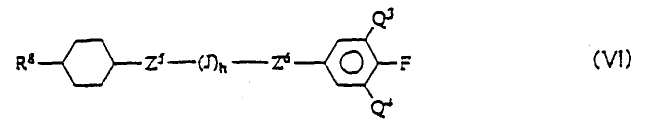 wherein R⁸ represents an alkyl group of 1 - 10 carbons, J represents trans-1,4-cyclohexylene or 1,4-phenylene, Q³ and Q⁴ independently represent H or F; Z⁵ and Z⁶ independently represent -COO- or a single bond; and h represents 0, 1 or 2.

In another embodiment of this invention, the fourth component comprises 0 - 50% by weight, based on a total weight of the liquid crystal composition.

In further embodiment of this invention, the compounds of formula (III) are those wherein R³ and R⁴ independently represent an alkyl group, an alkoxy group or an alkoxymethyl group, each group having 1 - 10 carbons.

In other embodiments of this invention, the compounds of formula (IV) are those wherein R⁵ represents an alkyl group of 1 - 10 carbons, and R⁶ represents an alkyl group or an alkoxy group, each group having 1 - 10 carbons.

This invention also provides a liquid crystal display element which comprises the liquid crystal composition of the invention.

For the compounds of formula (I) are preferable those of the following formulas: 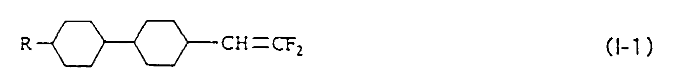 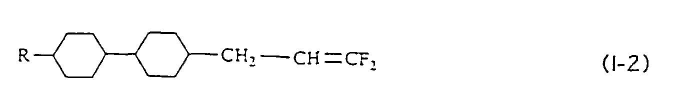 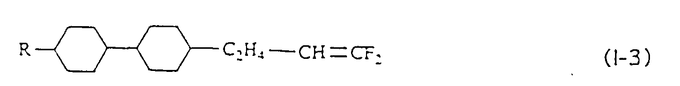 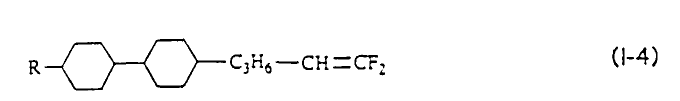 In the above formulas, R represents an alkyl group, an alkenyl group, an alkoxy group, an alkenyloxy group, alkoxymethyl group or an alkenyloxymethyl group, each group having 1-10 carbons.

These compounds are known in Japanese Patent Kokai Hei 1-175947 and Japanese Patent Kokai Hei 1-308239 (EP 0325 796B). They have a weakly positive dielectric anisotropy and a low optical anisotropy (Δn), which are used mainly for lowering the viscosity and improving the steepness.

For the second component, i.e., the compounds of formulas (II-a), (II-b) and (II-c) are preferable those of the following formulas: 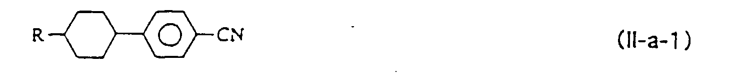 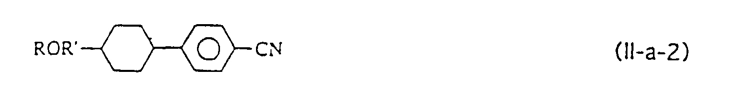 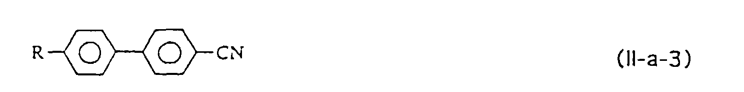 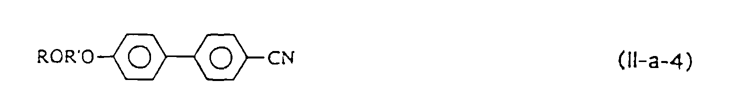 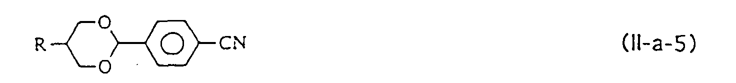 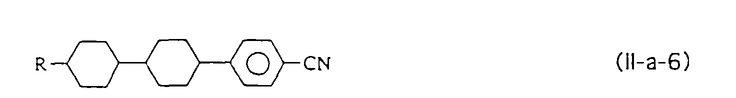 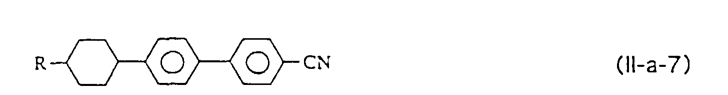 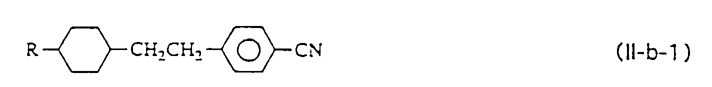 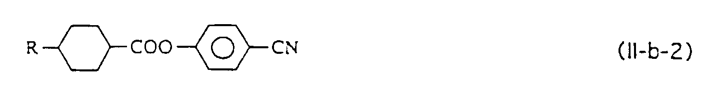 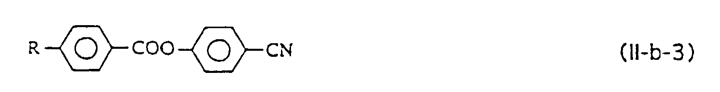 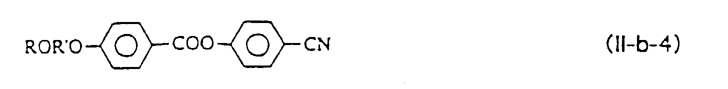 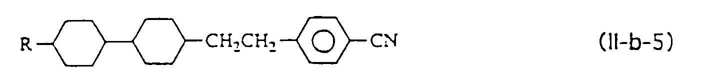 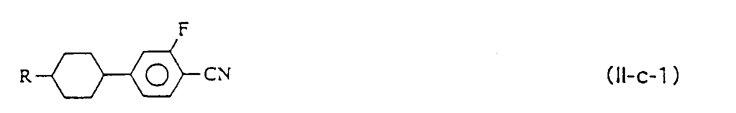 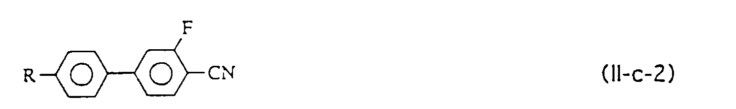 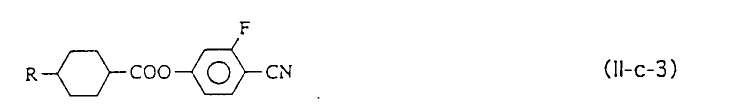 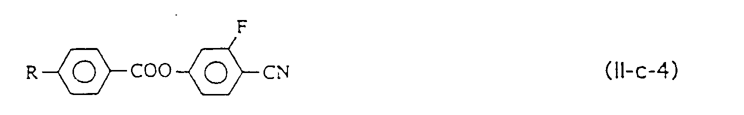 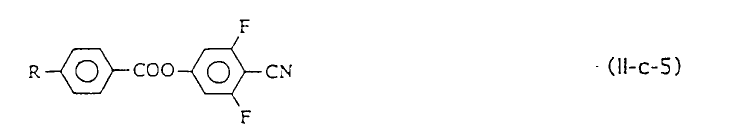 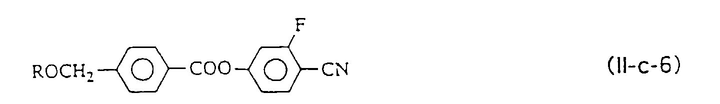 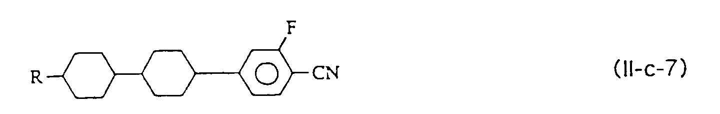 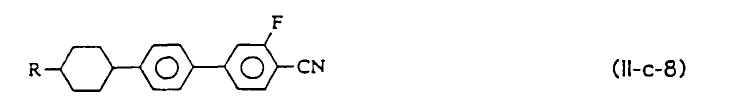 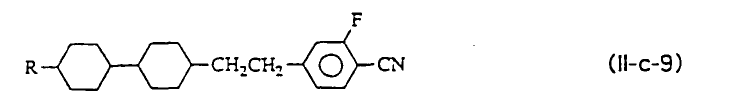 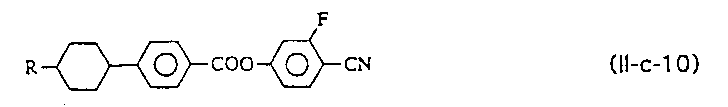 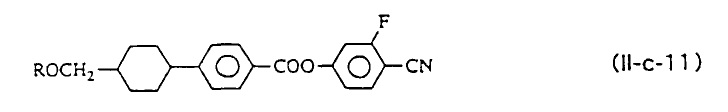 In the above formulas, R is an alkyl group or an alkenyl group and R' is an alkanediyl group or an alkenediyl group.

Of these compounds, the compounds of the following formulas (II-a-1), (II-a-3), (II-a-6), (II-a-7), (II-b-1), (II-b-3), (II-b-5), (II-c-1), (II-c-4), (II-c-5), (II-c-6), (II-c-7), (II-c-10) and (II-c-11) are especially preferably used.

These compounds of the second component have a positive dielectric anisotropy with particularly higher values, which are used mainly for reducing the threshold voltage and improving the steepness which is important as STN characteristics.

As the compounds of formulas (III) and (IV) of the third component, preferred compounds are recited below. 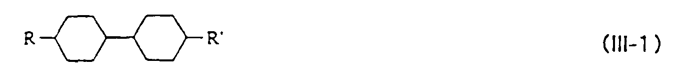 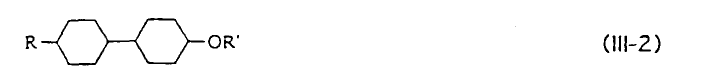 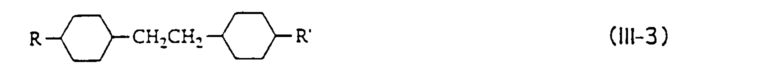 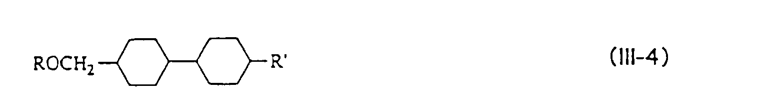 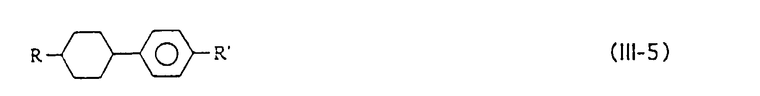 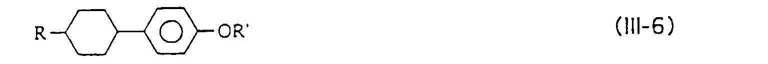 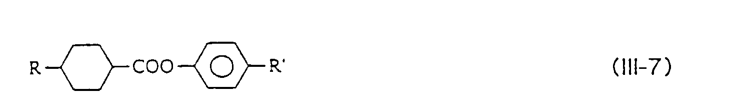 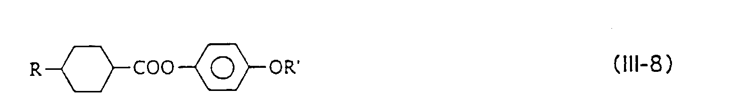 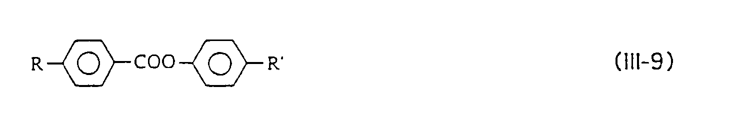 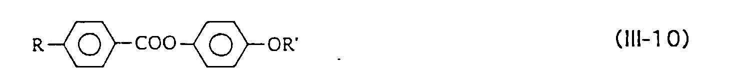 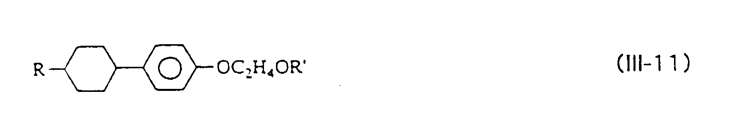 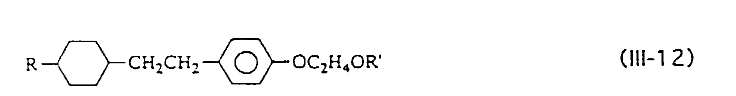 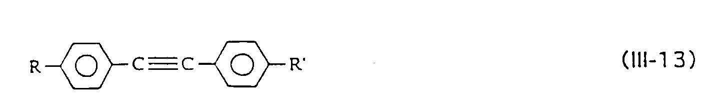 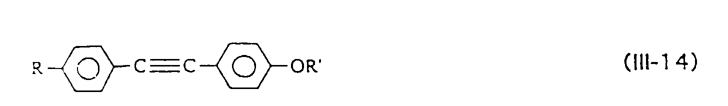 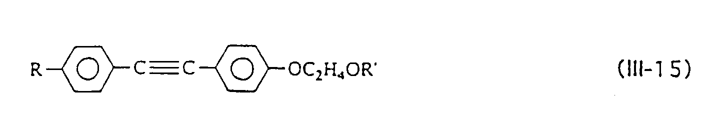 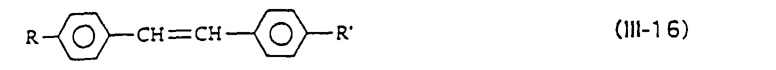 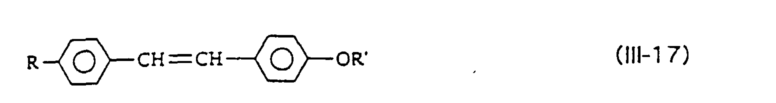 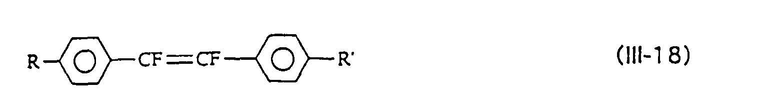 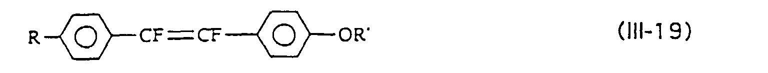 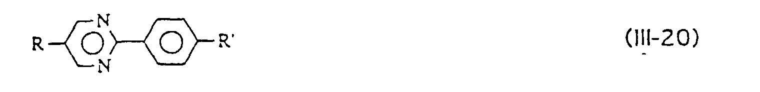 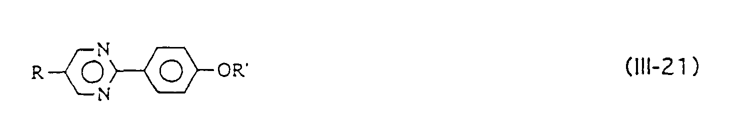 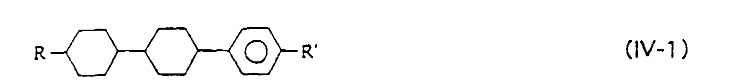 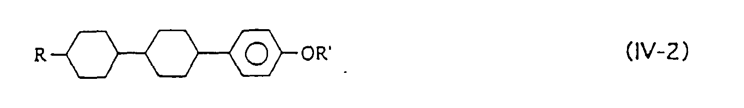 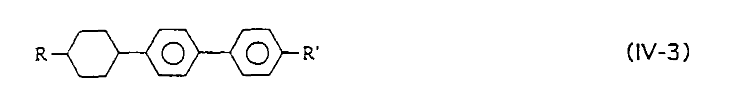 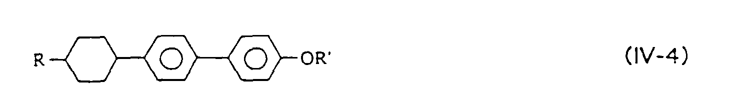 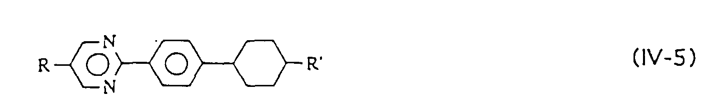 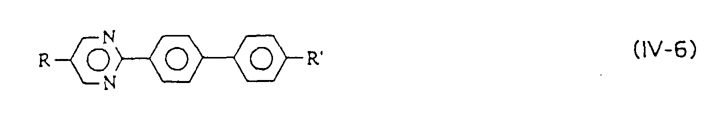 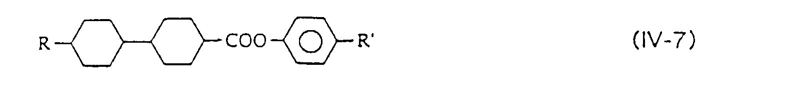 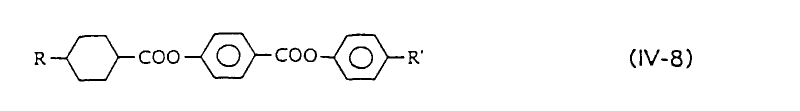 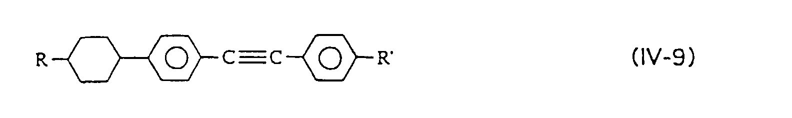 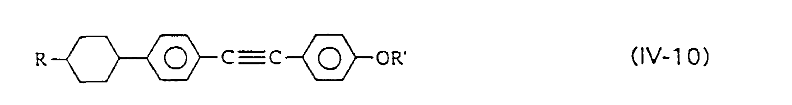 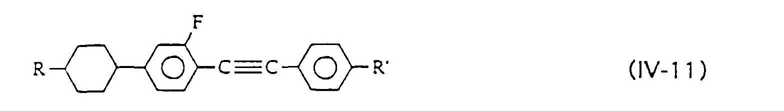 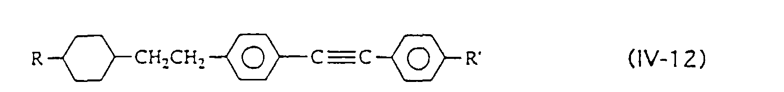 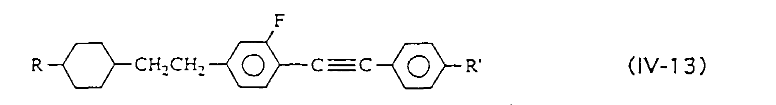 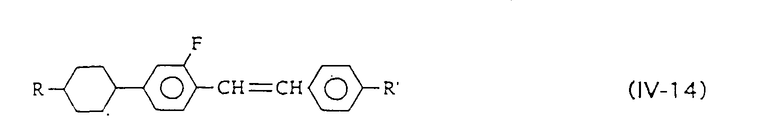 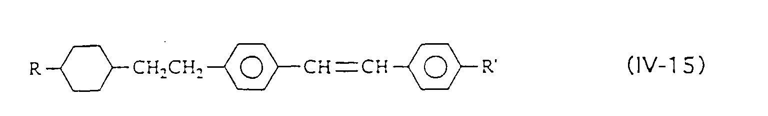 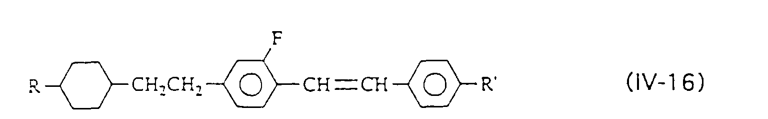 In the above formulas, R and R' independently represent an alkyl group or an alkenyl group, each group having 1 - 10 carbons.

Of the compounds of formula (III), those of the following formulas (III-1, -2, -4, -5, -6, -7, -8, -13, -14, -18, -19 and -20) are especially preferably used. Of the compounds of formula (IV), those of the following formulas (IV-1, -2, -5, -9, -11, -12, -14 and -15) are especially preferably used.

The compounds of formulas (III) and (IV) have a negative or weakly positive dielectric anisotropy. The compounds of formula (III) are used mainly for reducing the viscosity of the liquid crystal composition and/or for controlling Δn. The compounds of formula (IV) are used for broadening a nematic phase including an increase in a clearing point and/or for controlling Δn and viscosity.

As the compounds of formulas (V) and (VI), preferred compounds are recited below. 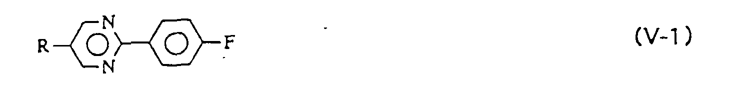 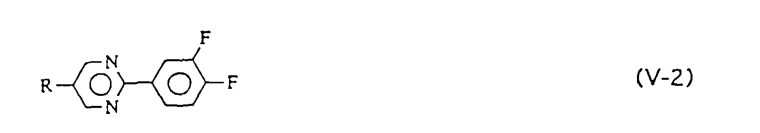 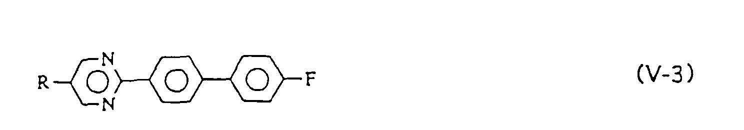 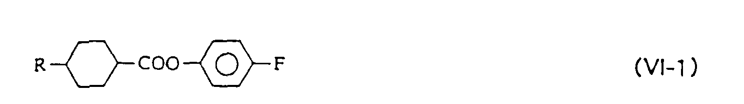 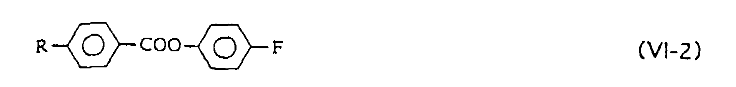 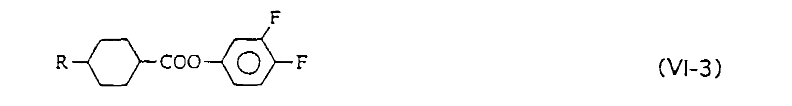 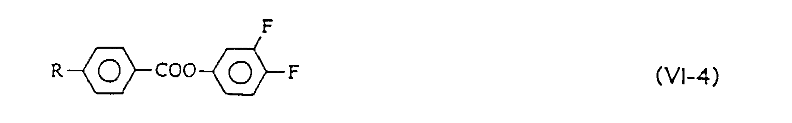 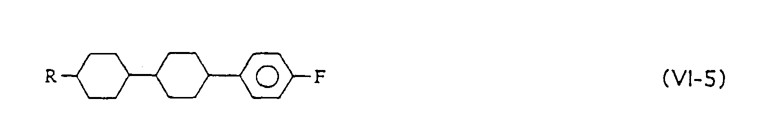 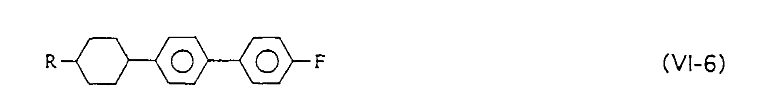 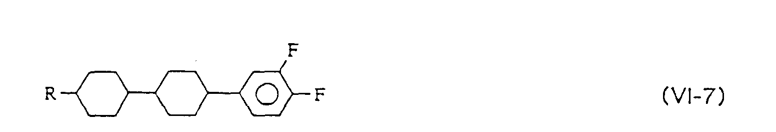 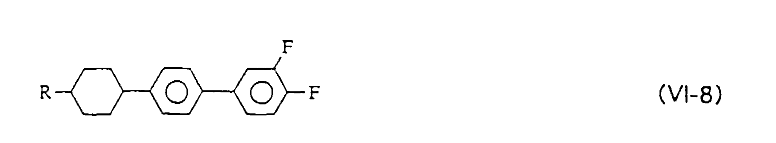 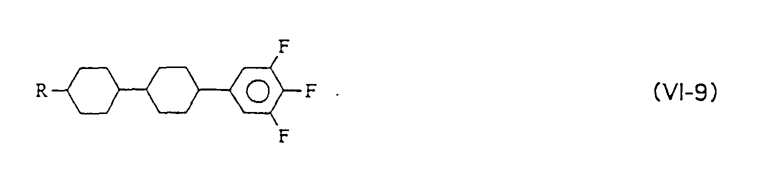 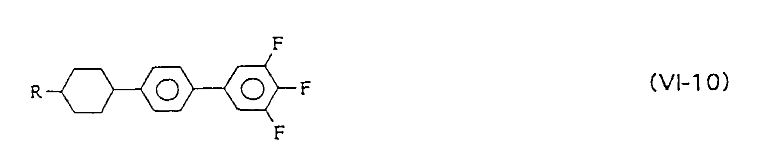 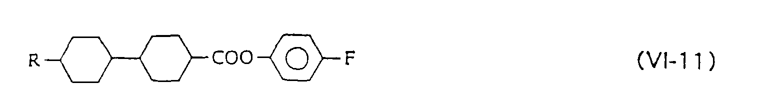 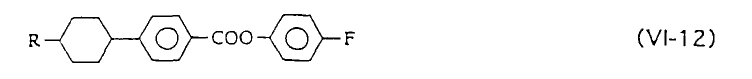 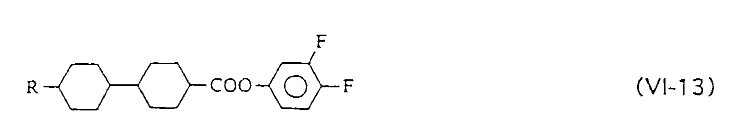 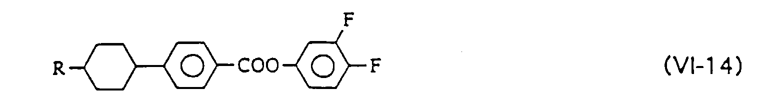 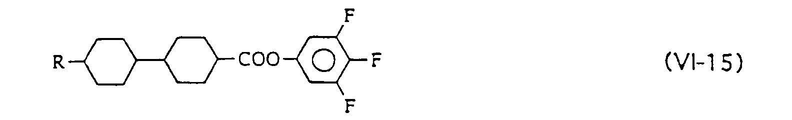 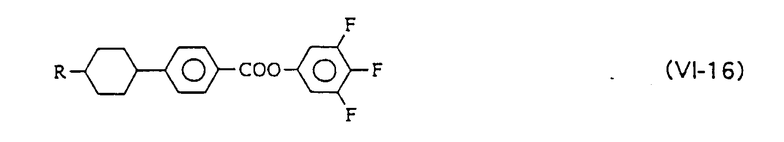 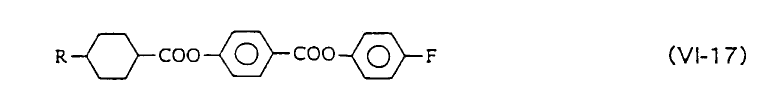 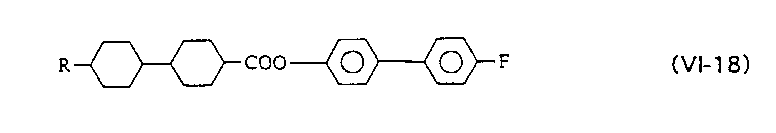 In the above formulas, R represents an alkyl group.

Of the compounds of formula (V), the compounds of the following formulas (V-1, -2 and -3) are especially preferably used.

Of the compounds of formula (VI), the compounds of the following formulas (VI-1, -5, -6, -7, -8, -9, -10, -11, -12, -13, -14, -15, -17 and -18) are especially preferably used.

The compounds of formulas (V) and (VI) have a positive dielectric anisotropy, which are used particularly for reducing the threshold voltage and improving the temperature-dependency. They are also used for controlling the viscosity and Δn and for broadening a nematic range by increasing a clearing point.

An amount of the first component used in this invention is preferably 3 - 50% by weight, more preferably 5 - 40% by weight, based on a total weight of a liquid crystal composition. With less than 3% by weight, it becomes difficult to attain the desired effects such as steepness and high response rate. With more than 50% by weight, a threshold voltage of the liquid crystal composition tends to be undesirably increased.

An amount of the second component used is preferably 10 - 60% by weight, more preferably 15 - 60% by weight. With less than 10% by weight, a threshold voltage of the liquid crystal composition tends to be undesirably increased. With more than 60% by weight, a viscosity of the liquid crystal composition tends to be undesirably increased.

An amount of the third component used is preferably 10 - 70% by weight, more preferably 15 - 60% by weight. With less than 10% by weight, a viscosity of the liquid crystal composition tends to be undesirably increased. With more than 70% by weight, a threshold voltage of the liquid crystal composition tends to be undesirably increased. An amount of the fourth component used is preferably up to 50% by weight, more preferably up to 40% by weight.

Depending on the applications of the liquid crystal display element, the liquid crystal composition can contain, in addition to the compounds of the above formulas (I) - (VI), a suitable amount of other compounds within the range of not adversely affecting the object of this invention, for the purpose of controlling the threshold voltage, nematic range, Δn, dielectric anisotropy, viscosity and the like. Examples of such compounds include the following compounds: 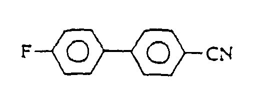 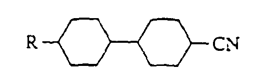 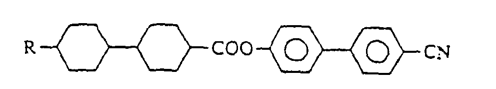 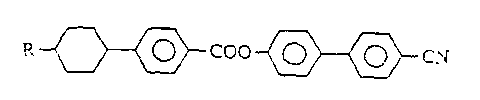 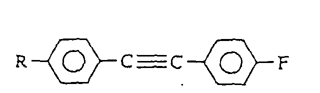 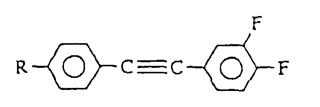 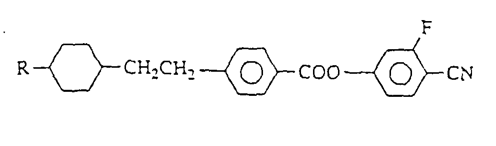 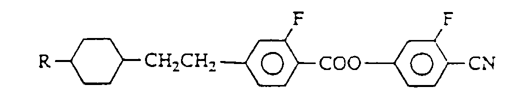 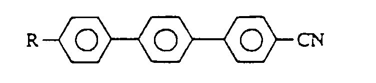 In the above formulas, R represents an alkyl group of 1 - 10 carbons.

The liquid crystal composition of the invention is prepared by a conventional process. In general, a process has been employed wherein various components are dissolved in each other at an elevated temperature. The liquid crystal materials of the present invention are improved and optimized with any suitable additives, depending on the intended applications. Such additives are well known to a person of ordinary skill in the art and also disclosed in literatures. Usually, chiral dopants and others are added for inducing the helical structure of liquid crystals thereby to adjust necessary twist angle and prevent reverse twist of liquid crystal molecules.

The present liquid crystal composition may be also used as a liquid crystal composition for guest-host (GH) mode by incorporating therein dichroic dyestuffs such as those of merocyanines, styryl derivatives, azo compounds, azomethines, azoxy compounds, quinophthalones, anthraquinones and tetrazine derivatives, etc. The liquid crystal composition of the present invention may be further used for NCAP prepared by micro-capsulating nematic liquid crystals or polymer-dispersion type display elements (PDLCD) represented by polymer net-work liquid crystal display element (PNLCD) having three-dimensional net-work polymer formed in liquid crystal. In addition, the present liquid crystal composition can be used as a liquid crystal material for electrically controlled birefringence (ECB) mode or dynamic scattering (DS) mode.

This invention is further illustrated by the following examples and comparative examples, in which all parts and percentages (%) are by weight unless otherwise indicated.

For evaluation on a 240° STN cell, a cell thickness d was selected so as to give Δn·d (i.e., the product of a cell thickness d and an optical anisotropy Δn) of approximately 0.85, while a chiral compound was added to the liquid crystal composition so as to provide a ratio of a cell thickness d to a pitch p of a liquid crystal composition (d/p) of approximately 0.5 and then the resulting mixture was poured into the cell. The cell evaluation was performed in a yellow mode and a voltage-transmittance characteristics (V-T characteristics) were determined with a square wave at 70 Hz. A ratio of the voltage at a transmittance of 90% (V₉₀) and the voltage at a transmittance of 10% (V₁₀) was evaluated as the steepness (V₁₀/V₉₀).

As the chiral compounds are used the following compounds, but with no limitation thereto:

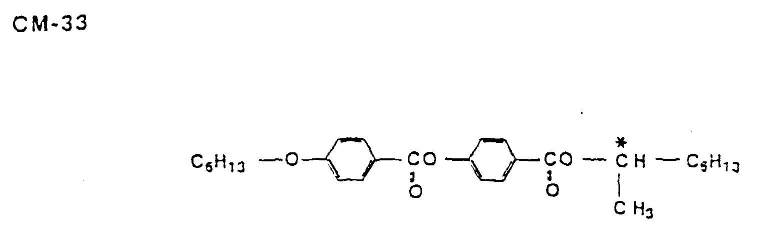

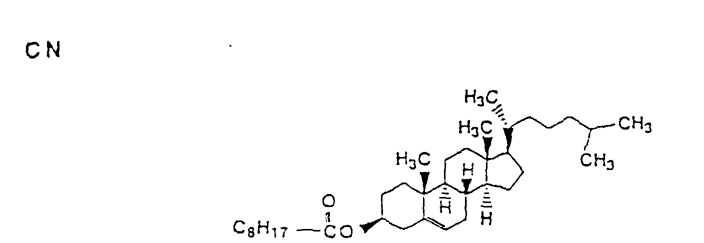

### Comparative Example 1

Composition A consisting of the following compounds was prepared:

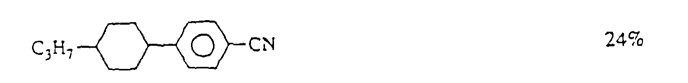

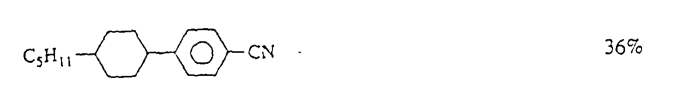

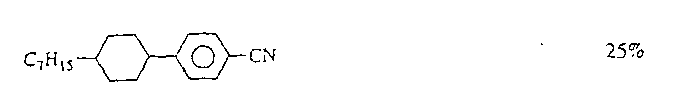

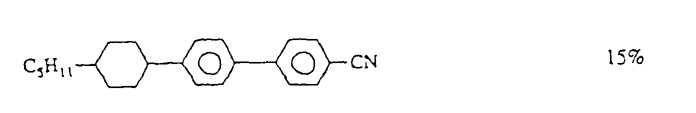

Composition A thus prepared had the following properties:

| | |
|---|---|
| Clearing point | T_{NI} = 72.4 (°C) |
| Viscosity at 20°C | η₂₀ = 27.0 (mPa · s) |
| Optical anisotropy at 25°C | Δn = 0.137 |
| Dielectric anisotropy at 20°C | Δε = 11.0 |
| Threshold voltage at 20°C | Vₜₕ = 1.78 (V) |

### Comparative Example 2

A liquid crystal composition was prepared by admixing 85 parts of Composition A obtained in Comparative Example 1 with 15 parts of the compound of the following formula included within the scope of formula (I):

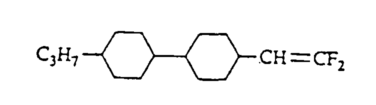

The liquid crystal composition thus prepared had the following properties:

| | |
|---|---|
| Clearing point | T_{NI} = 67.6 (°C) |
| Viscosity at 20°C | η₂₀ = 20.2 (mPa·s) |
| Optical anisotropy at 25°C | Δn = 0.123 |
| Dielectric anisotropy at 20°C | Δε = 9.6 |
| Threshold voltage at 20°C | Vₜₕ = 1.74 (V) |

To 100 parts of the liquid crystal composition as obtained above was added 0.80 part of the chiral compound CM-33 to prepare a composition. This composition was poured into a 240^{°} STN cell having a thickness of d=6.9 µm and the cell evaluation was performed in a yellow mode.

The voltage-transmittance characteristics (V-T characteristics) were determined with a square wave at 70 Hz, with the following results:
V₉₀ = 1.95 (V), V₁₀ = 2.50 (V), steepness V₁₀/V₉₀ = 1.282.

### Example 1

A liquid crystal composition consisting of the following compounds was prepared:

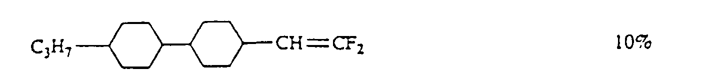

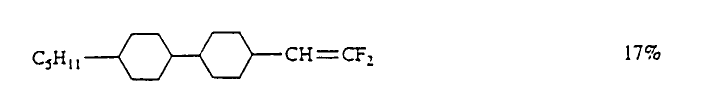

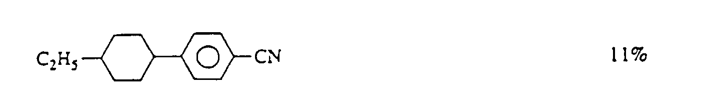

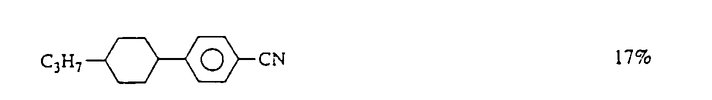

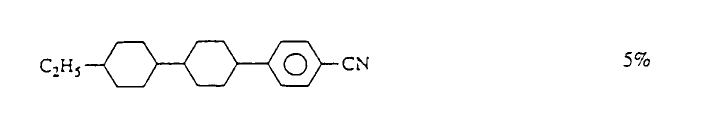

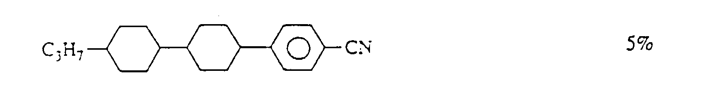

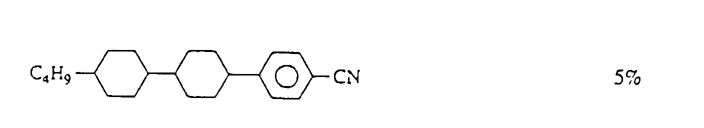

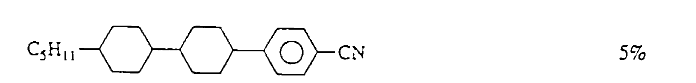

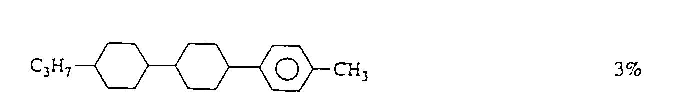

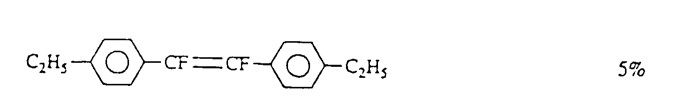

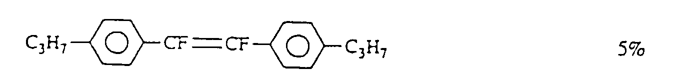

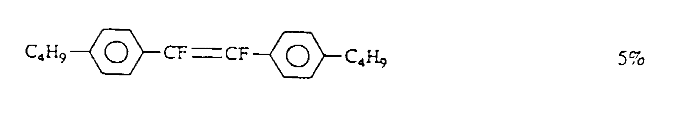

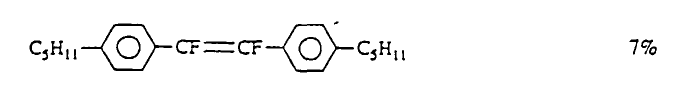

The liquid crystal composition thus prepared had the following properties:

| | |
|---|---|
| Clearing point | T_{NI} = 86.7 (°C) |
| Viscosity at 20°C | η₂₀ = 13.4 (mPa·s) |
| Optical anisotropy at 25°C | Δn = 0.133 |
| Dielectric anisotropy at 20°C | Δε = 7.0 |
| Threshold voltage at 20°C | Vₜₕ = 2.03 (V) |

To 100 parts of the liquid crystal composition as obtained above was added 0.85 part of the chiral compound CM-33 to prepare a composition. This composition was poured into a 240° STN cell having a thickness of d=6.4 µm. The cell evaluation was performed in a yellow mode.

The voltage-transmittance characteristics (V-T characteristics) were determined with a square wave at 70 Hz, with the following results:
V₉₀ = 2.21 (V), V₁₀ = 2.38 (V), steepness V₁₀/V₉₀ = 1.076

This liquid crystal composition had higher clearing point and lower viscosity as compared with the compositions of Comparative Examples 1 and 2. The steepness was greatly improved as compared with the composition of Comparative Example 2.

### Example 2

A liquid crystal composition consisting of the following compounds was prepared:

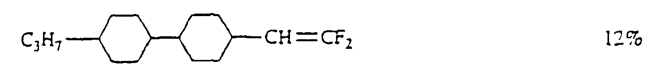

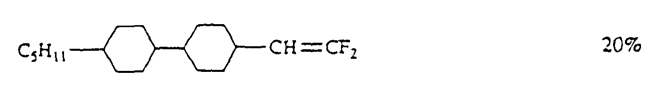

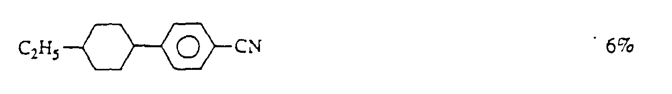

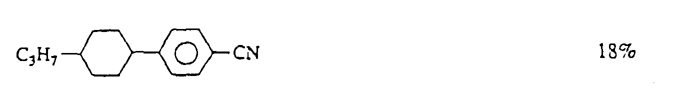

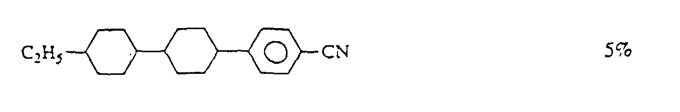

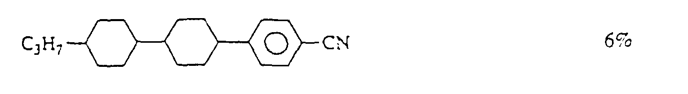

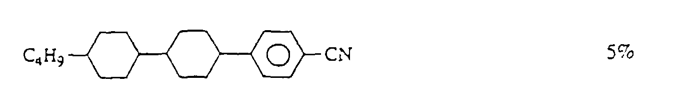

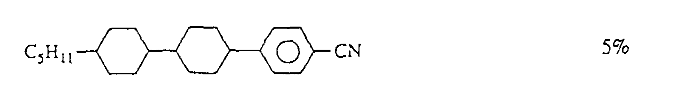

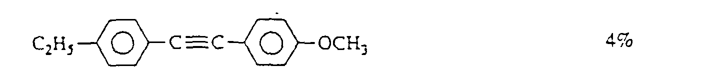

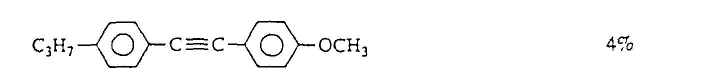

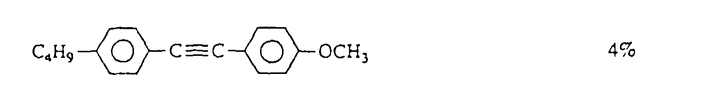

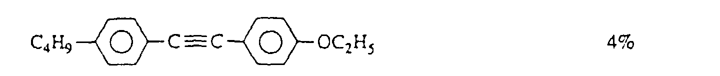

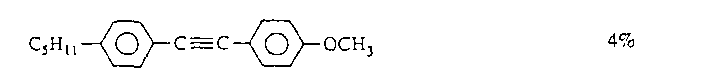

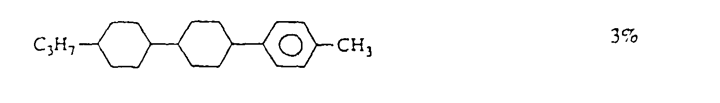

The liquid crystal composition thus prepared had the following properties:

| | |
|---|---|
| Clearing point | T_{NI} = 85.0 (°C) |
| Viscosity at 20°C | η₂₀ = 15.8 (mPa·s) |
| Optical anisotropy at 25°C | Δn = 0.133 |
| Dielectric anisotropy at 20°C | Δε = 6.5 |
| Threshold voltage at 20°C | Vₜₕ = 2.03 (V) |

To 100 parts of the liquid crystal composition as obtained above was added 0.80 part of the chiral compound CM-33 to prepare a composition. This composition was poured into a 240^{°} STN cell having a thickness of d=6.4 µm. The cell evaluation was performed in a yellow mode.

The voltage-transmittance characteristics (V-T characteristics) were determined with a square wave at 70 Hz with the following results:
V₉₀ = 2.24 (V), V₁₀ = 2.37 (V), steepness V₁₀/V₉₀ = 1.054

This liquid crystal composition had higher clearing point and lower viscosity as compared with the compositions of Comparative Examples 1 and 2. The steepness was greatly improved as compared with the composition of Comparative Example 2.

### Example 3

A liquid crystal composition consisting of the following compounds was prepared:

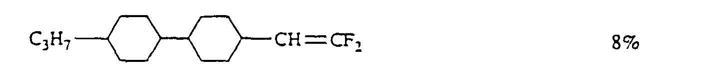

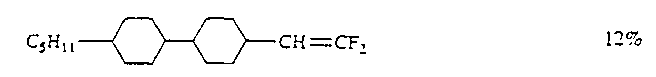

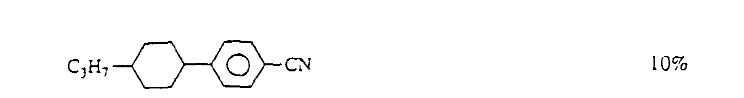

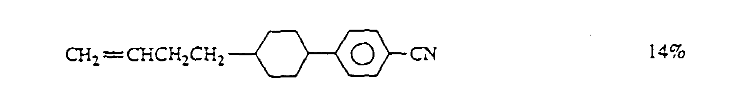

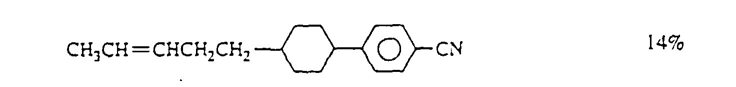

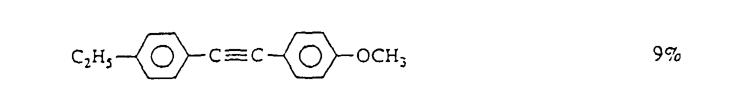

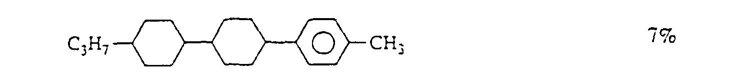

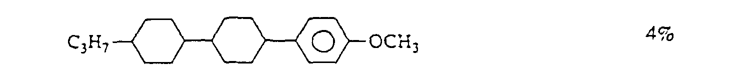

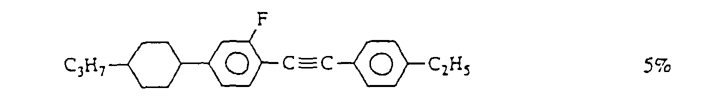

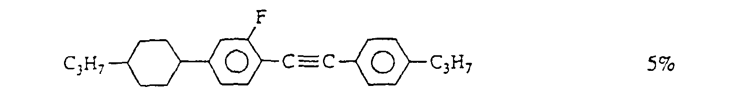

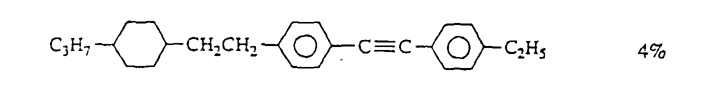

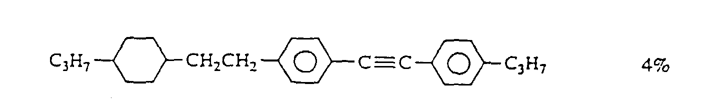

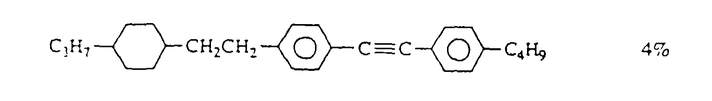

The liquid crystal composition thus prepared had the following properties:

| | |
|---|---|
| Clearing point | T _{NI} = 90.6 (°C) |
| Viscosity at 20°C | η ₂₀ = 14.4 (mPa·s) |
| Optical anisotropy at 25°C | Δn = 0.154 |
| Dielectric anisotropy at 20°C | Δε = 6.0 |
| Threshold voltage at 20°C | V ₜₕ = 2.29 (V) |

To 100 parts of the liquid crystal composition as obtained above was added 0.85 part of the chiral compound CM-33 to prepare a composition. This composition was poured into a 240^{°} STN cell having a thickness of d=5.5 µm. The cell evaluation was performed in a yellow mode.

The voltage-transmittance characteristics (V-T characteristics) were determined with a square wave at 70 Hz, with the following results:
V₉₀ = 2.45 (V), V₁₀ = 2.53 (V), steepness V₁₀/V₉₀ = 1.034

This liquid crystal composition had higher clearing point and lower viscosity as compared with the compositions of Comparative Examples 1 and 2. The steepness was greatly improved as compared with the composition of Comparative Example 2.

### Example 4

A liquid crystal composition consisting of the following compounds was prepared:

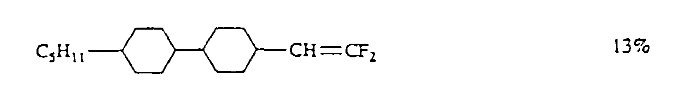

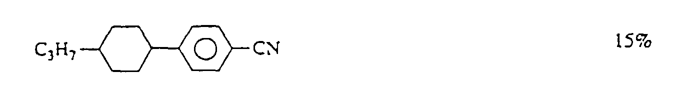

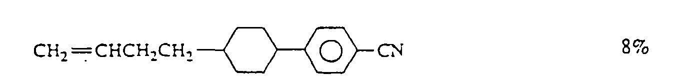

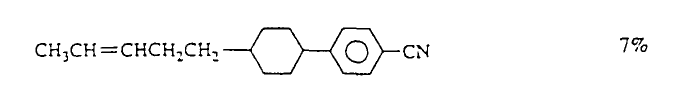

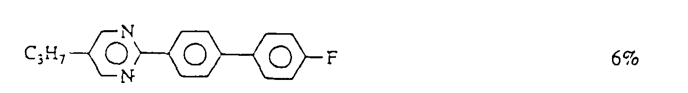

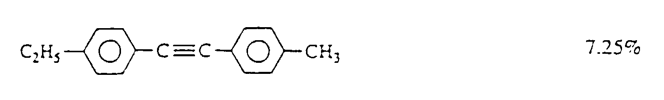

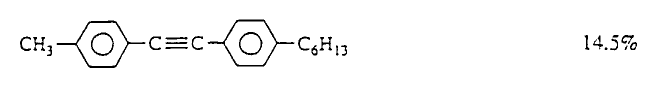

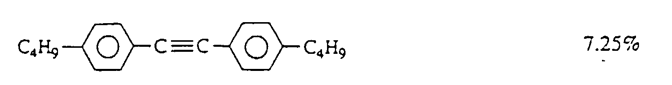

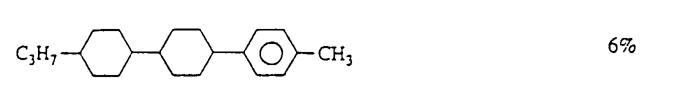

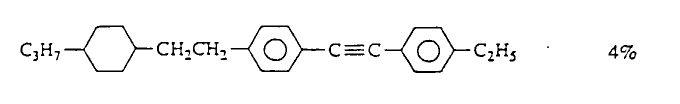

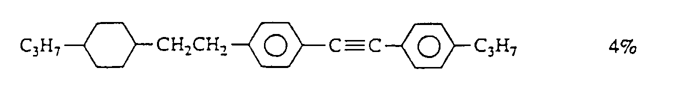

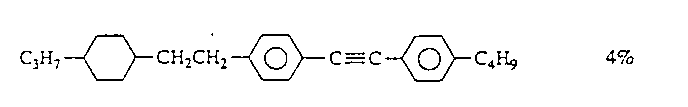

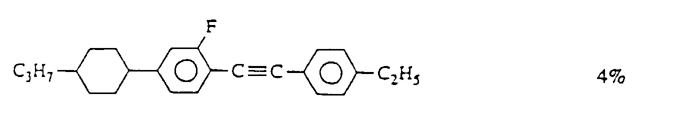

The liquid crystal composition thus prepared had the following properties:

| | |
|---|---|
| Clearing point | T_{NI} = 70.7 (°C) |
| Viscosity at 20°C | η₂₀ = 15.2 (mPa·s) |
| Optical anisotropy at 25°C | Δn = 0.171 |
| Dielectric anisotropy at 20°C | Δε = 5.5 |
| Threshold voltage at 20°C | Vₜₕ = 2.01 (V) |

To 100 parts of the liquid crystal composition as obtained above was added 1.09 part of the chiral compound CM-33 to prepare a composition. This composition was poured into a 240^{°} STN cell having a thickness of d=5.0 µm. The cell evaluation was performed in a yellow mode.

The voltage-transmittance characteristics (V-T characteristics) were determined with a square wave at 70 Hz, with the following results:
V₉₀ = 2.11 (V), V₁₀ = 2.41 (V), steepness V₁₀/V₉₀ = 1.142

This liquid crystal composition had lower viscosity as compared with those of Comparative Examples 1 and 2. The steepness was greatly improved as compared with the composition of Comparative Example 2.

### Example 5

A liquid crystal composition consisting of the following compounds was prepared:

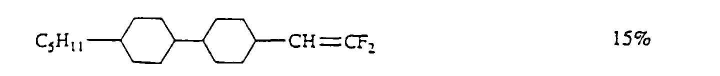

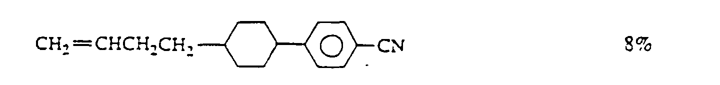

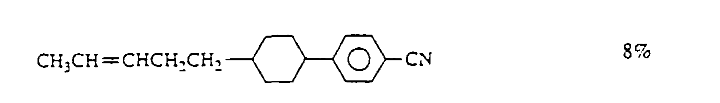

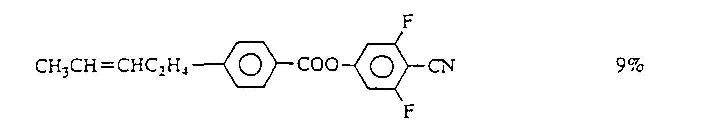

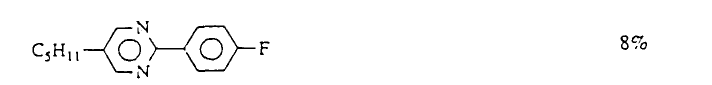

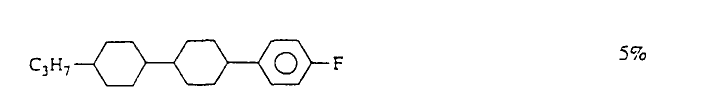

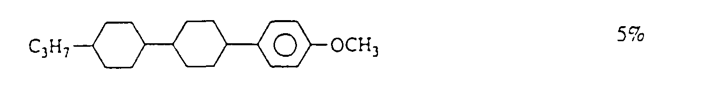

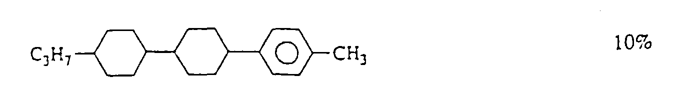

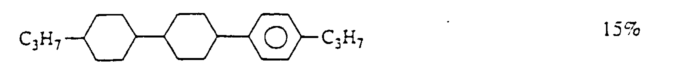

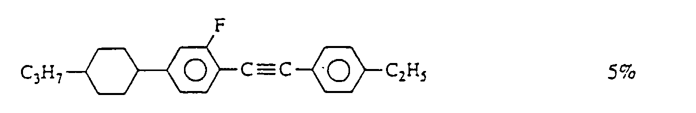

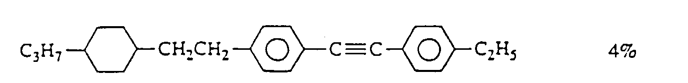

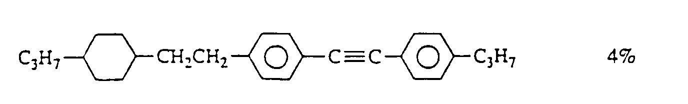

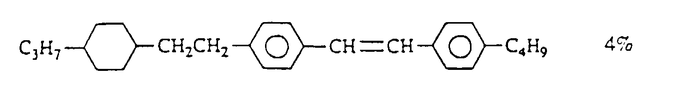

The liquid crystal composition thus prepared had the following properties:

| | |
|---|---|
| Clearing point | T_{NI} = 102.7 (°C) |
| Viscosity at 20°C | η₂₀ = 16.5 (mPa·s) |
| Optical anisotropy at 25°C | Δn = 0.134 |
| Threshold voltage at 20°C | Vₜₕ = 2.00 (V) |

To 100 parts of the liquid crystal composition as obtained above was added 1.87 part of the chiral compound CN to prepare a composition. This composition was poured into a 240^{°} STN cell having a thickness of d=6.4 µm. The cell evaluation was performed in a yellow mode.

The voltage-transmittance characteristics (V-T characteristics) were determined with a square wave at 70 Hz with the following results:
V₉₀ = 2.19 (V), V₁₀ = 2.34 (V), steepness V₁₀/V₉₀ = 1.068

This liquid crystal composition had higher clearing point and lower viscosity as compared with those of Comparative Examples 1 and 2. The steepness was greatly improved as compared with the composition of Comparative Example 2.

### Example 6

A liquid crystal composition consisting of the following compounds was prepared.

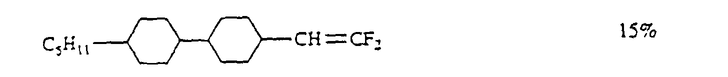

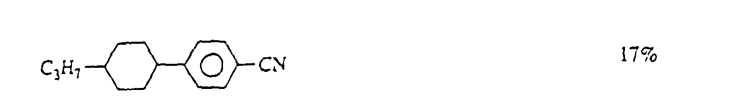

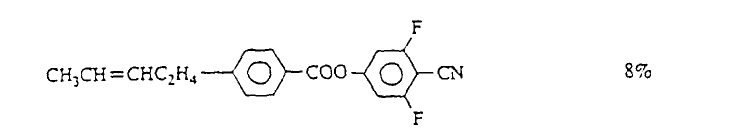

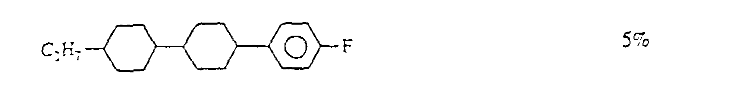

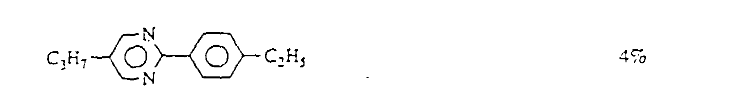

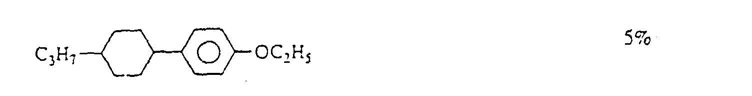

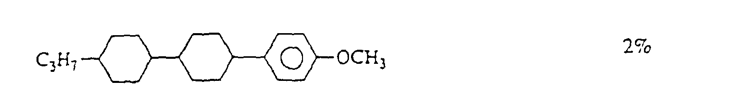

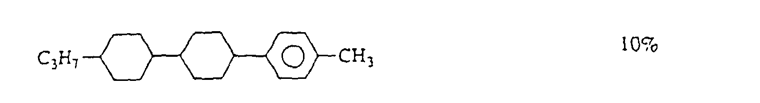

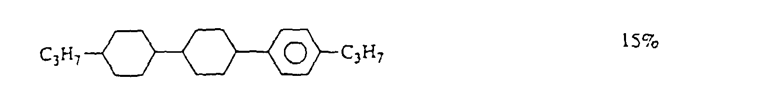

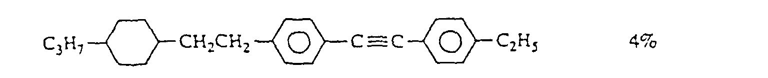

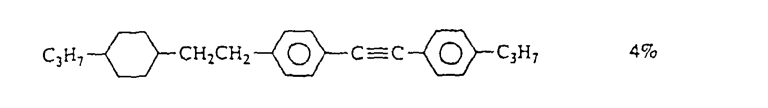

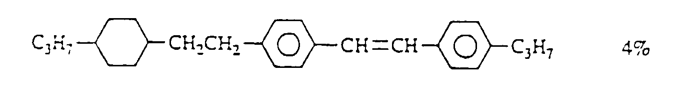

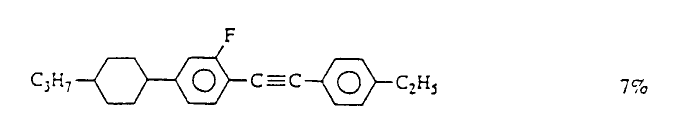

The liquid crystal composition thus prepared had the following properties:

| | |
|---|---|
| Clearing point | T_{NI} = 102.0 (°C) |
| Viscosity at 20°C | η₂₀ = 15.7 (mPa·s) |
| Optical anisotropy at 25°C | Δn = 0.131 |
| Threshold voltage at 20°C | Vₜₕ = 2.07 (V) |

To 100 parts of the liquid crystal composition as obtained above was added 1.74 part of the chiral compound CN to prepare a composition. This composition was poured into a 240° STN cell having a thickness of d=6.5 µm. The cell evaluation was performed in a yellow mode.

The voltage-transmittance characteristics (V-T characteristics) were determined with a square wave at 70 Hz, with the following results:
V₉₀ = 2.19 (V), V₁₀ = 2.36 (V), steepness V₁₀/V₉₀ = 1.078

This liquid crystal composition had higher clearing point and lower viscosity as compared with those of Comparative Examples 1 and 2. The steepness was greatly improved as compared with the composition of Comparative Example 2.

### Example 7

A liquid crystal composition consisting of the following compounds was prepared.

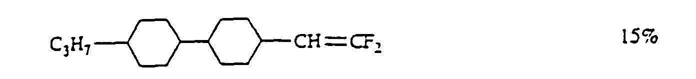

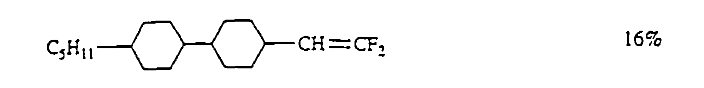

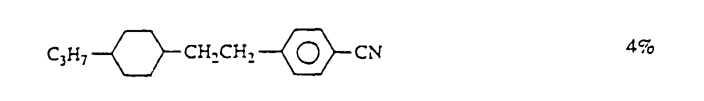

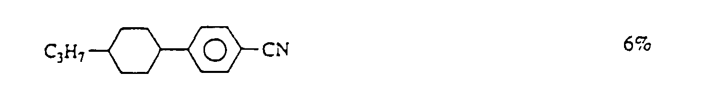

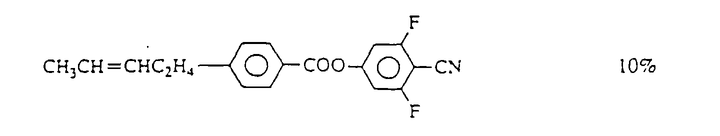

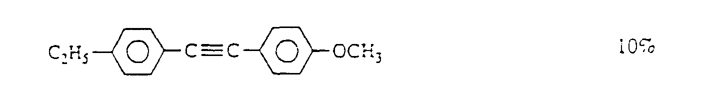

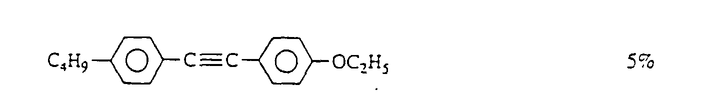

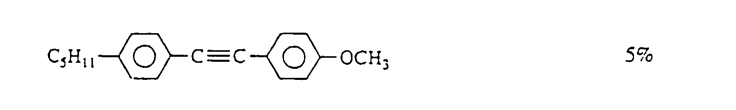

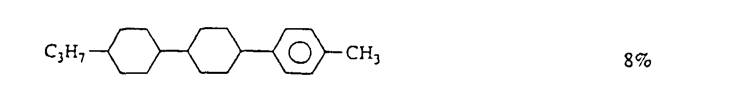

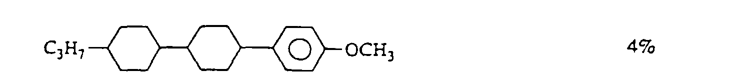

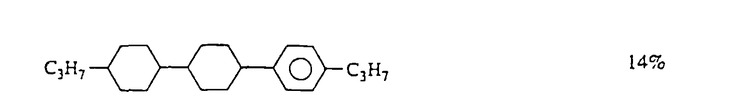

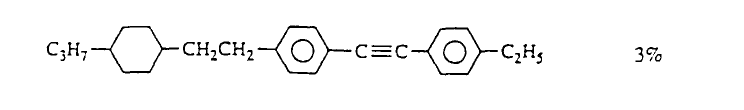

The liquid crystal composition thus prepared had the following properties:

| | |
|---|---|
| Clearing point | T_{NI} = 78.7 (°C) |
| Viscosity at 20°C | η₂₀ = 12.6 (mPa·s) |
| Optical anisotropy at 25°C | Δn = 0.133 |
| Dielectric anisotropy at 20°C | Δε = 6.5 |
| Threshold voltage at 20°C | Vₜₕ = 1.93 (V) |

To 100 parts of the liquid crystal composition as obtained above was added 0.82 part of the chiral compound CM-33 to prepare a composition. This composition was poured into a 240^{°} STN cell having a thickness of d=6.4 µm. The cell evaluation was performed in a yellow mode.

The voltage-transmittance characteristics (V-T characteristics) were determined with a square wave at 70 Hz, with the following results:
V₉₀ = 2.15 (V), V₁₀ = 2.30 (V), steepness V₁₀/V₉₀ = 1.070

### Example 8

A liquid crystal composition consisting of the following compounds was prepared.

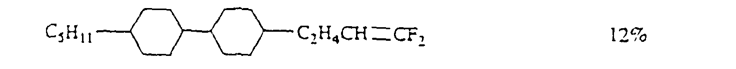

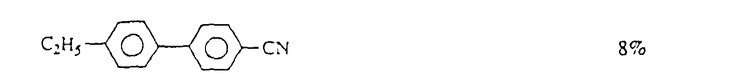

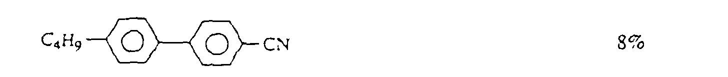

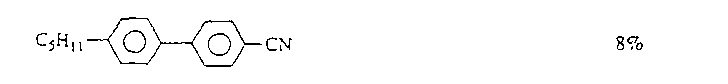

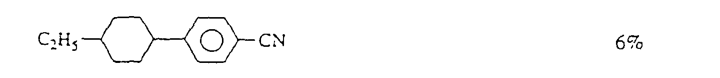

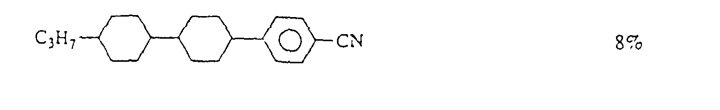

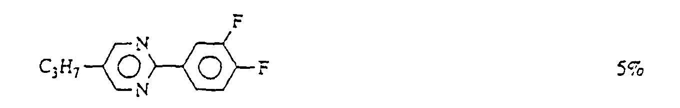

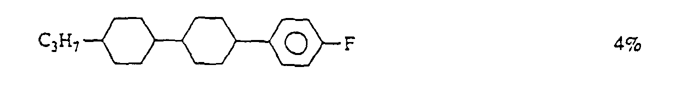

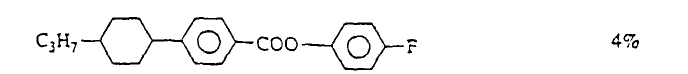

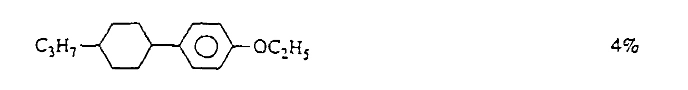

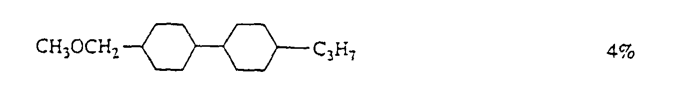

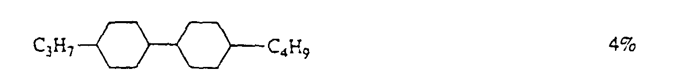

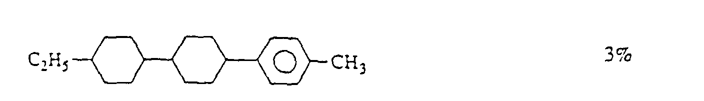

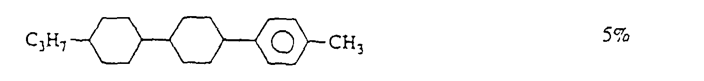

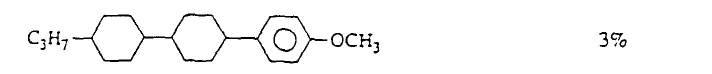

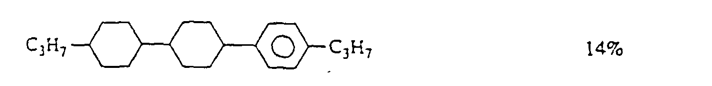

The liquid crystal composition thus prepared had the following properties:

| | |
|---|---|
| Clearing point | T_{NI} = 76.6 (°C) |
| Viscosity at 20°C | η₂₀ = 19.1 (mPa·s) |
| Optical anisotropy at 25°C | Δn = 0.120 |
| Dielectric anisotropy at 20°C | Δε = 7.2 |
| Threshold voltage at 20°C | Vₜₕ = 1.79 (V) |

To 100 parts of the liquid crystal composition as obtained above was added 0.80 part of the chiral compound CM-33 to prepare a composition. This composition was poured into a 240^{°} STN cell having a thickness of d=7.0 µm. The cell evaluation was performed in a yellow mode.

The voltage-transmittance characteristics (V-T characteristics) were determined with a square wave at 70 Hz, with the following results:
V₉₀ = 1.92 (V), V₁₀ = 2.09 (V), steepness V₁₀/V₉₀ = 1.089

### Example 9

A liquid crystal composition consisting of the following compounds was prepared.

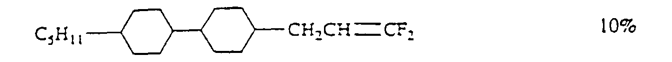

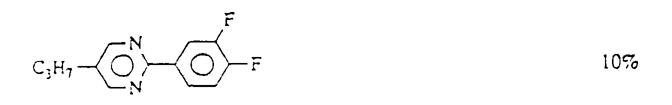

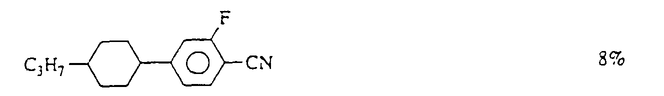

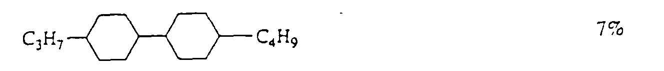

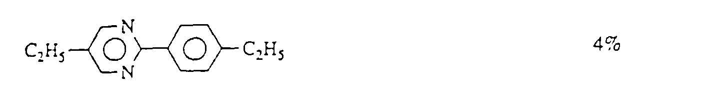

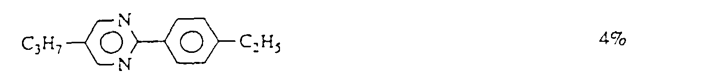

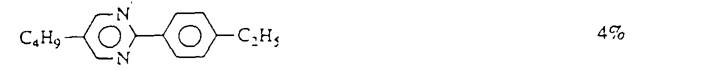

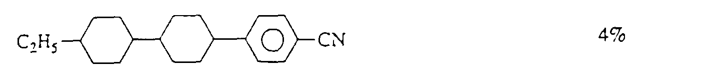

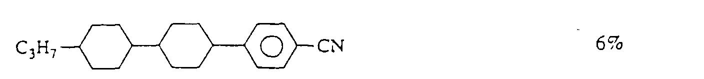

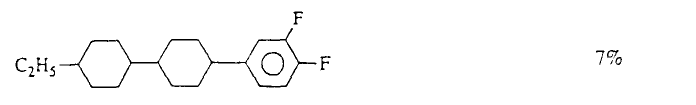

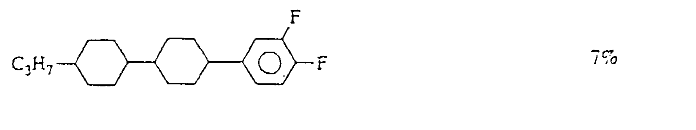

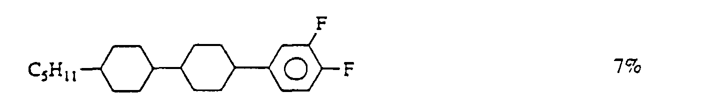

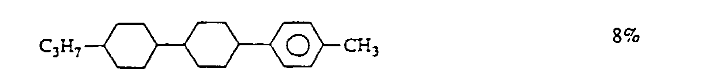

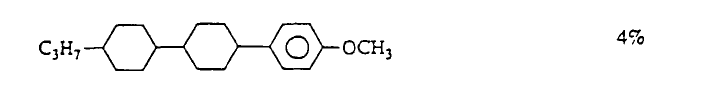

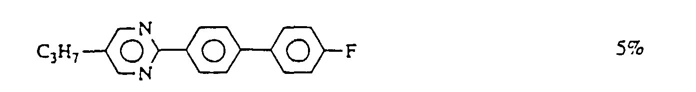

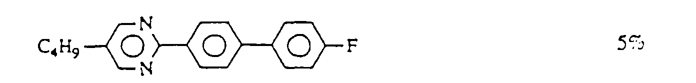

The liquid crystal composition thus prepared had the following properties:

| | |
|---|---|
| Clearing point | T_{NI} = 76.1 (°C) |
| Viscosity at 20°C | η₂₀ = 18.0 (mPa·s) |
| Optical anisotropy at 25°C | Δn = 0.111 |
| Dielectric anisotropy at 20°C | Δε = 7.8 |
| Threshold voltage at 20°C | Vₜₕ = 1.70 (V) |

To 100 parts of the liquid crystal composition as obtained above was added 0.78 part of the chiral compound CM-33 to prepare a composition. This composition was poured into a 240^{°} STN cell having a thickness of d=7.5 µm. The cell evaluation was performed in a yellow mode.

The voltage-transmittance characteristics (V-T characteristics) were determined with a square wave at 70 Hz, with the following results:
V₉₀ = 1.86 (V), V₁₀ = 2.03 (V), steepness V₁₀/V₉₀ = 1.091

### Example 10

A liquid crystal composition consisting of the following compounds was prepared.

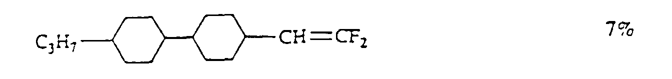

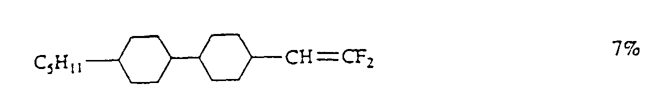

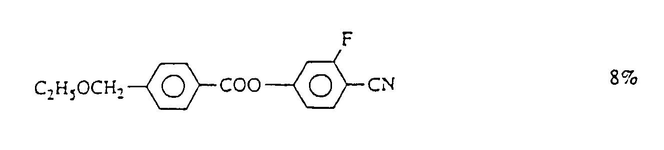

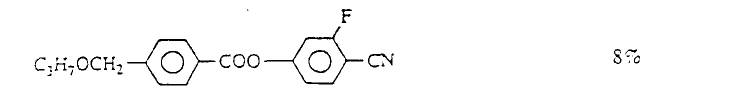

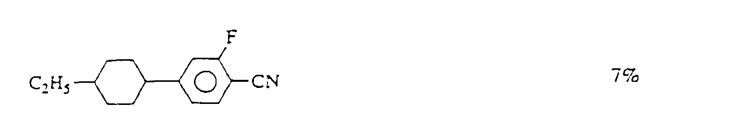

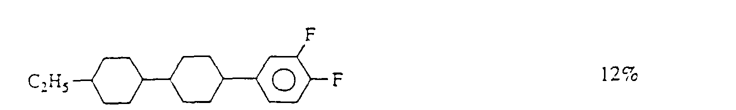

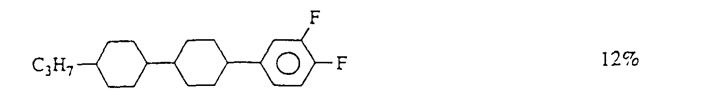

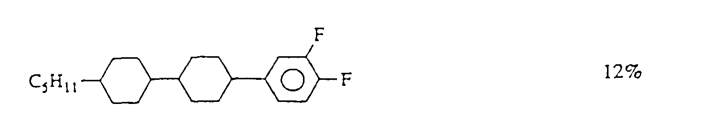

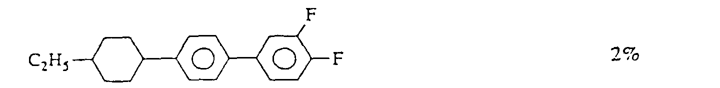

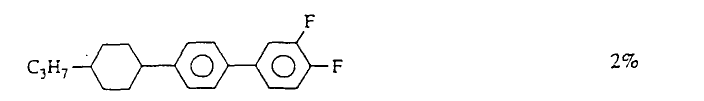

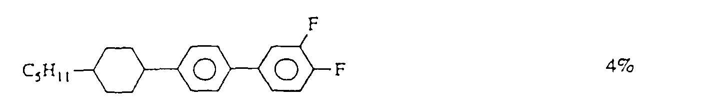

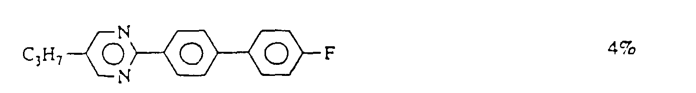

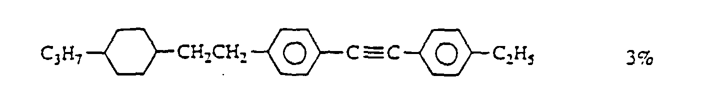

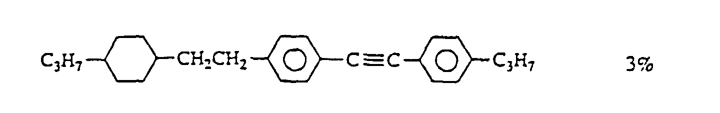

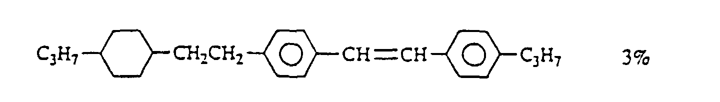

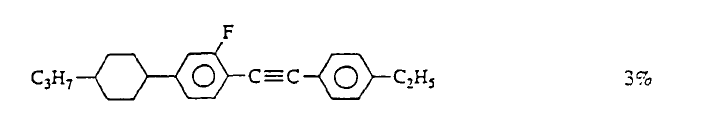

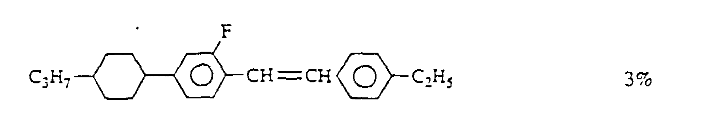

The liquid crystal composition thus prepared had the following properties:

| | |
|---|---|
| Clearing point | T_{NI} = 85.0 (°C) |
| Viscosity at 20°C | η₂₀ = 23.7 (mPa·s) |
| Optical anisotropy at 25°C | Δn = 0.124 |
| Dielectric anisotropy at 20°C | Δε = 11.4 |
| Threshold voltage at 20°C | Vₜₕ = 1.39 (V) |

To 100 parts of the liquid crystal composition as obtained above was added 0.80 part of the chiral compound CM-33 to prepare a composition. This composition was poured into a 240^{°} STN cell having a thickness of d=6.9 µm. The cell evaluation was performed in a yellow mode.

The voltage-transmittance characteristics (V-T characteristics) were determined with a square wave at 70 Hz, with the following results:
V₉₀ = 1.46 (V), V₁₀ = 1.60 (V), steepness V₁₀/V₉₀ = 1.096

### Example 11

A liquid crystal composition consisting of the following compounds was prepared:

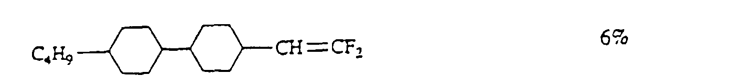

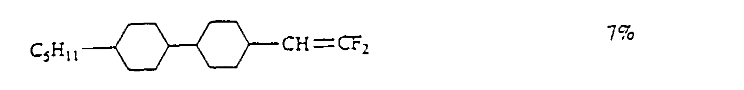

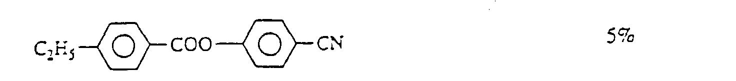

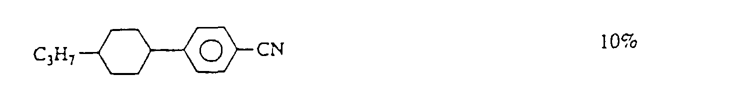

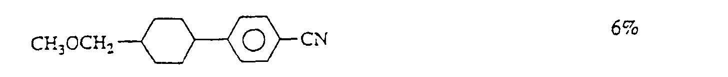

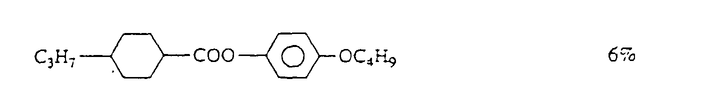

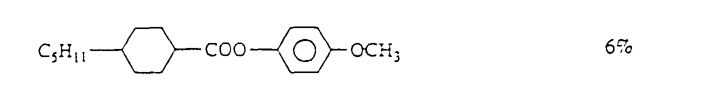

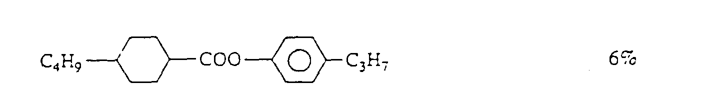

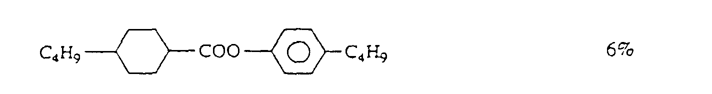

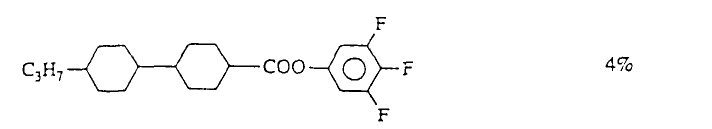

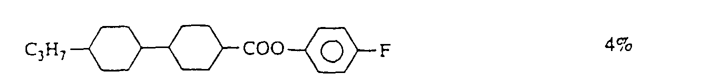

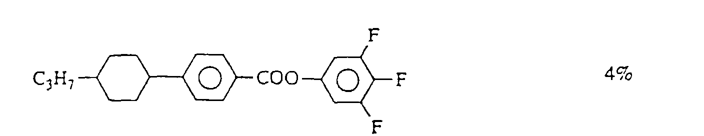

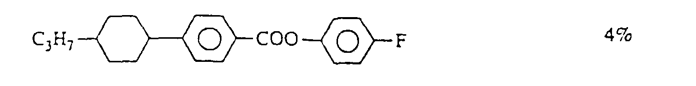

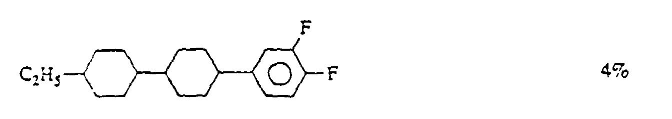

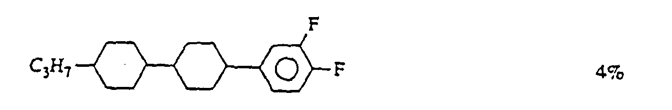

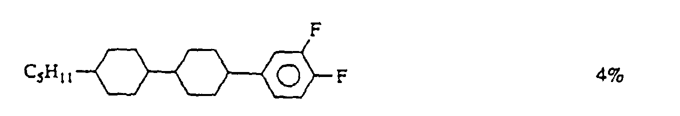

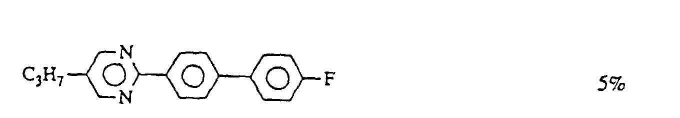

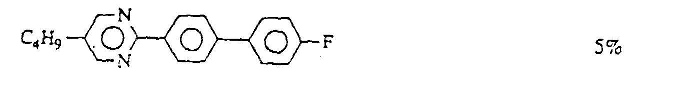

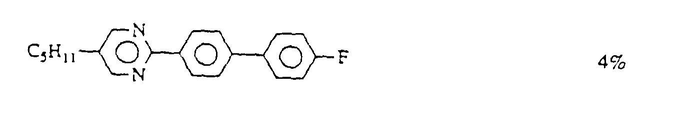

The liquid crystal composition thus prepared had the following properties:

| | |
|---|---|
| Clearing point | T_{NI} = 81.2 (°C) |
| Viscosity at 20°C | η₂₀ = 24.5 (mPa·s) |
| Optical anisotropy at 25°C | Δn = 0.113 |
| Dielectric anisotropy at 20°C | Δε = 8.1 |
| Threshold voltage at 20°C | Vₜₕ = 1.54 (V) |

To 100 parts of the liquid crystal composition as obtained above was added 1.50 part of the chiral compound CN to prepare a composition. This composition was poured into a 240° STN cell with a thickness of d=7.5 µm. The cell evaluation was performed in a yellow mode.

The voltage-transmittance characteristics (V-T characteristics) were determined with a square wave at 70 Hz, with the following results:
V₉₀ = 1.67 (V), V₁₀ = 1.82 (V), steepness V₁₀/V₉₀ = 1.090

As apparent from the above examples, the present invention can provide the liquid crystal compositions having excellent voltage-transmittance characteristics (steepness), especially to meet colorization and also having a lower viscosity to meet a high response rate, while satisfying various characteristics required for the STN display mode.

## Claims

1. A liquid crystal composition which comprises:
(1) as a first component, at least one of compounds of formula (I) 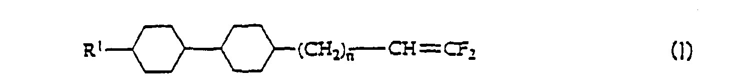 wherein R¹ represents an alkyl group of 1 - 10 carbons or an alkenyl group of 2 - 10 carbons, wherein one -CH₂- group or two or more -CH₂- groups not adjacent to each other may be substituted by -O-, and n represents an integer of 0 - 20;
(2) as a second component, at least one of compounds of formula (II-a), (II-b) or (II-c) 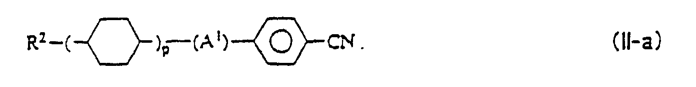 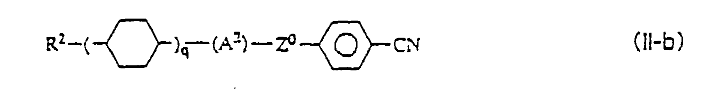 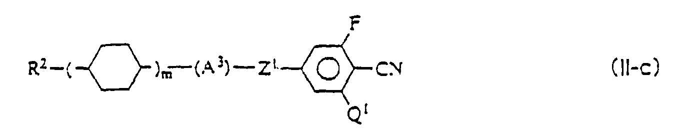 wherein R² represents an alkyl group of 1 - 10 carbons or an alkenyl group of 2 - 10 carbons, wherein one -CH₂- group or two or more -CH₂- groups not adjacent to each other may be substituted by -O-; Z° represents -COO- or -CH₂CH₂-, Z¹ represents -CH₂CH₂-, -COO- or a single bond; Q¹ represents H or F; A¹ represents trans-1,4-cyclohexylene, 1,4-phenylene or 1,3-dioxane-2,5-diyl (attached at the 2-position thereof to the cyanophenyl ring moiety); A² and A³ independently represent trans-1,4-cyclohexylene or 1,4-phenylene; and p, q and m independently represent 0 or 1; and
(3) as a third component, at least one of compounds of formula (III) or (IV)
R³-(B)-Z²-(C)-R⁴ (III)
wherein R³ and R⁴ independently represent an alkyl group of 1 - 10 carbons or an alkenyl group of 2 - 8 carbons, wherein one -CH₂- group or two or more -CH₂- groups may be substituted by -O-; B represents trans-1,4-cyclohexylene, pyrimidine-2,5-diyl (attached at the 2-position thereof to the group Z²) or 1,4-phenylene; C represents trans-1,4-cyclohexylene or 1,4-phenylene; and Z² represents -C≡C-, -COO-, -CH₂CH₂-, -CH=CH-, -CF=CF- or a single bond; or
R⁵-(D)-Z³-(E)-Z⁴-(G)-R⁶ (IV)
wherein R⁵ represents an alkyl group of 1 - 10 carbons or an alkenyl group of 2 - 10 carbons, wherein one -CH₂- group or two or more -CH₂- groups not adjacent to each other may be substituted by -O-; R⁶ represents an alkyl group, an alkoxy group or an alkoxymethyl group, each having 1 - 10 carbons; D represents trans-1,4-cyclohexylene or pyrimidine-2,5-diyl (attached at the 2-position thereof to the group Z³); E represents trans-1,4-cyclohexylene or 1,4-phenylene wherein H is optionally substituted with F at one of the 2-, 3-, 5- and 6-positions thereof; G represents trans-1,4-cyclohexylene or 1,4-phenylene; Z³ represents -CH₂CH₂- or a single bond and, Z⁴ represents - C≡C-,-COO-, -, -CH=CH- or a single bond, with the proviso, that E and G do not represent 1,4-phenylene simultaneously when D represents trans 1,4-cyclohexylene and both Z³ and Z⁴ represent single bonds.

2. The liquid crystal composition as claimed in claim 1 wherein the first component comprises 3 - 50% by weight, the second component comprises 10 - 70% by weight and the third component comprises 10 - 70% by weight, based on a total weight of the liquid crystal composition.

3. The liquid crystal composition as claimed in claim 1 or 2 which further comprises as a fourth component, at least one of compounds of formula (V) or (VI) 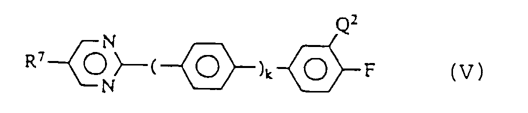 wherein R⁷ represents an alkyl group of 1 - 10 carbons; Q² represents H or F; and k represents 0 or 1 or 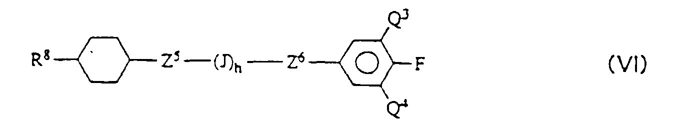 wherein R⁸ represents an alkyl group of 1 - 10 carbons; J represents trans-1,4-cyclohexylene or 1,4-phenylene; Q³ and Q⁴ independently represent H or F; Z⁵ and Z⁶ independently represent -COO- or a single bond; and h represents 0, 1 or 2.

4. The liquid crystal composition as claimed in claim 3 wherein the fourth component comprises up to 50% by weight, based on a total weight of the liquid crystal composition.

5. The liquid crystal composition as claimed in any of claims 1 - 4 wherein R³ and R⁴ in formula (III) independently represent an alkyl group, an alkoxy group or an alkoxymethyl group, each group having 1 - 10 carbons.

6. The liquid crystal composition as claimed in any of claims 1 - 5 wherein R⁵ in formula (IV) represents an alkyl group of 1 - 10 carbons, and R⁶ represents an alkyl group or an alkoxy group, each group having 1 - 10 carbons.

7. A liquid crystal display element which comprises a liquid crystal composition as claimed in any of claims 1 - 6.

## Patentansprüche

1. Flüssigkristall-Zusammensetzung, die umfaßt:
(1) als erste Komponente mindestens eine der Verbindungen der Formel (I) 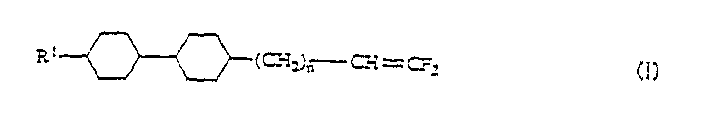 wobei R¹ eine Alkylgruppe mit 1 bis 10 Kohlenstoffatomen oder eine Alkenylgruppe mit 2 bis 10 Kohlenstoffatomen darstellt, wobei eine -CH₂-Gruppe oder zwei oder mehr -CH₂-Gruppen, die nicht einander benachbart sind, durch -O- substituiert sein können und n eine ganze Zahl von 0 bis 20 darstellt;
(2) als zweite Komponente mindestens eine der Verbindungen der Formel (II-a), (II-b) oder (II-c) 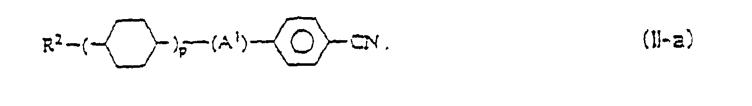 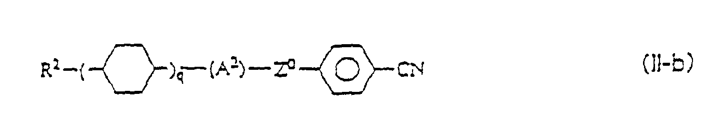 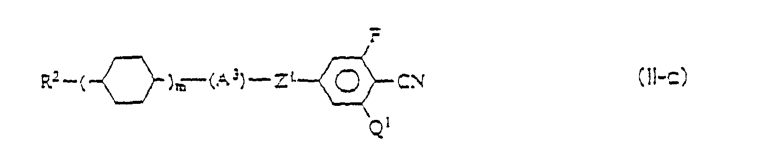 wobei R² eine Alkylgruppe mit 1 bis 10 Kohlenstoffatomen oder eine Alkenylgruppe mit 2 bis 10 Kohlenstoffatomen darstellt, wobei eine -CH₂-Gruppe oder zwei oder mehr -CH₂-Gruppen, die nicht einander benachbart sind, durch -O- substituiert sein können; Z⁰-COO- oder -CH₂CH₂- darstellt, Z¹ -CH₂CH₂-, -COO- oder eine Einfachbindung darstellt; Q¹ H oder F darstellt, A¹ trans-1,4-Cyclohexylen, 1,4-Phenylen oder 1,3-Dioxan-2,5-diyl darstellt (gebunden an der 2-Position an die Cyanophenyl-Ringeinheit);
A² und A³ unabhängig voneinander trans-1,4-Cyclohexylen oder 1,4-Phenylen darstellen; und p, q und m unabhängig voneinander 0 oder 1 darstellen; und
(3) als dritte Komponente mindestens eine der Verbindungen der Formel (III) oder (IV)
R³-(B)-Z²-(C)-R⁴ (III)
wobei R³ und R⁴ unabhängig voneinander eine Alkylgruppe mit 1 bis 10 Kohlenstoffatomen oder eine Alkenylgruppe mit 2 bis 8 Kohlenstoffatomen darstellen, wobei eine -CH₂-Gruppe oder zwei oder mehr -CH₂-Gruppen durch -O- substituiert sein können; B trans-1,4-Cyclohexylen, Pyrimidin-2,5-diyl (an der 2-Position an die Gruppe Z² gebunden) oder 1,4-Phenylen darstellt; C trans-1,4-Cyclohexylen oder 1,4-Phenylen darstellt; und Z² -C ≡ C-, -COO-, -CH₂CH₂-, -CH=CH-, -CF=CF- oder eine Einfachbindung darstellt; oder
R⁵-(D)-Z³-(E)-Z⁴-(G)-R⁶ (IV)
wobei R⁵ eine Alkylgruppe mit 1 bis 10 Kohlenstoffatomen oder eine Alkenylgruppe mit 2 bis 10 Kohlenstoffatomen darstellt, wobei eine -CH₂-Gruppe oder zwei oder mehr -CH₂-Gruppen, die nicht einander benachbart sind, durch -O- substituiert sein können; R⁶ eine Alkylgruppe, eine Alkoxygruppe oder eine Alkoxymethylgruppe darstellt, jeweils mit 1 bis 10 Kohlenstoffatomen; D trans-1,4-Cyclohexylen oder Pyrimidin-2,5-diyl (gebunden an der 2-Position an die Gruppe Z³) darstellt; E trans-1,4-Cyclohexylen oder 1,4-Phenylen darstellt, wobei H gegebenenfalls durch F an einer der Positionen 2, 3, 5 oder 6 substituiert ist; G trans-1,4-Cyclohexylen oder 1,4-Phenylen darstellt; Z³ -CH₂CH₂- oder eine Einfachbindung darstellt, und Z⁴ -C ≡ C-, -COO-, -CH=CH- oder eine Einfachbindung darstellt, unter der Voraussetzung, daß E und G nicht gleichzeitig 1,4-Phenylen darstellen, wenn D trans-1,4-Cyclohexylen darstellt und sowohl Z³ als auch Z⁴ eine Einfachbindung darstellen.

2. Flüssigkristall-Zusammensetzung wie in Anspruch 1 beansprucht, wobei die erste Komponente 3 bis 50 Gew.-% umfaßt, die zweite Komponente 10 bis 70 Gew.-% umfaßt und die dritte Komponente 10 bis 70 Gew.-% umfaßt, bezogen auf das Gesamtgewicht der Flüssigkristall-Zusammensetzung.

3. Flüssigkristall-Zusammensetzung wie in Anspruch 1 oder 2 beansprucht, die weiter als vierte Komponente mindestens eine der Verbindungen der Formel (V) oder (VI) umfaßt 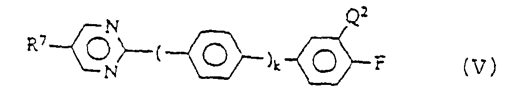 wobei R⁷ eine Alkylgruppe mit 1 bis 10 Kohlenstoffatomen darstellt; Q² H oder F darstellt; und k 0 oder 1 darstellt oder 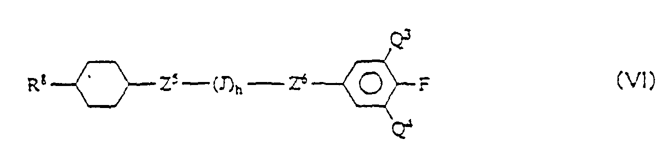 wobei R⁸ eine Alkylgruppe mit 10 Kohlenstoffatomen darstellt, J trans-1,4-Cyclohexylen oder 1,4-Phenylen darstellt; Q³ und Q⁴ unabhängig voneinander H oder F darstellen; Z⁵ und Z⁶ unabhängig voneinander -COO- oder eine Einfachbindung darstellen; und h 0,1 oder 2 darstellt.

4. Flüssigkristall-Zusammensetzung wie in Anspruch 3 beansprucht, wobei die vierte Komponente bis zu 50 Gew.-% bezogen auf das Gesamtgewicht der Flüssigkristall-Zusammensetzung umfaßt.

5. Flüssigkristall-Zusammensetzung wie in einem der Ansprüche 1 bis 4 beansprucht, wobei R³ und R⁴ in Formel (III) unabhängig voneinander eine Alkylgruppe, eine Alkoxygruppe oder eine Alkoxymethylgruppe darstellen, wobei jede Gruppe 1 bis 10 Kohlenstoffatome aufweist.

6. Flüssigkristall-Zusammensetzung wie in einem der Ansprüche 1 bis 5 beansprucht, wobei R⁵ in Formel (IV) eine Alkylgruppe mit 1 bis 10 Kohlenstoffatomen darstellt, und R⁶ eine Alkylgruppe oder eine Alkoxygruppe darstellt, wobei jede Gruppe 1 bis 10 Kohlenstoffatome aufweist.

7. Flüssigkristall-Anzeige-Element, welches eine Flüssigkristall-Zusammensetzung wie in einem der Ansprüche 1 bis 6 beansprucht umfaßt.

## Revendications

1. Composition de cristal liquide qui comprend :
(1) comme premier composant, au moins un des composés de formule (I) 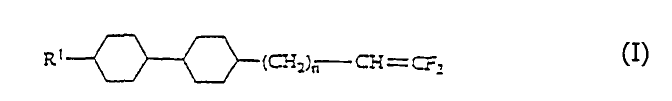 dans laquelle R¹ représente un groupe alkyle de 1 à 10 atomes de carbone ou un groupe alcényle de 2 à 10 atomes de carbone, dans laquelle un groupe -CH₂- ou deux ou plusieurs groupes -CH₂- non adjacents entre eux peuvent être substitués par -O-, et n représente un entier de 0 à 20;
(2) comme second composant, au moins un des composés de formule (II-a), (II-b) ou (II-c) 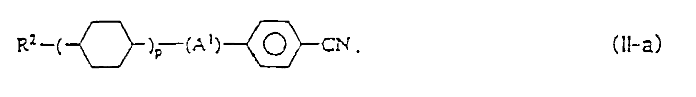 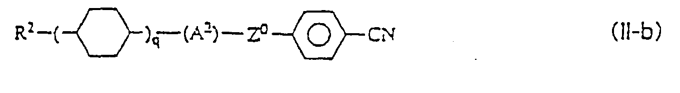 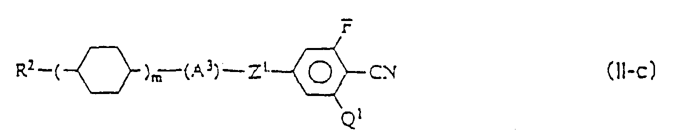 dans laquelle R² représente un groupe alkyle de 1 à 10 atomes de carbone ou un groupe alcényle de 2 à 10 atomes de carbone, dans laquelle un groupe -CH₂- ou deux ou plusieurs groupes -CH₂- non adjacents entre eux peuvent être substitués par -O-; Z⁰ représente -COO- ou -CH₂-CH₂-, Z¹ représente -CH₂-CH₂-, -COO- ou une simple liaison; Q¹ représente un atome d'hydrogène ou de fluor; A¹ représente un groupe trans-1,4-cyclohexylène, 1,4-phénylène ou 1,3-dioxane-2,5-diyle (attaché par la position 2- de celui-ci au fragment de cycle cyanophényle); A² et A³ représentent indépendamment un groupe trans-1,4-cyclohexylène ou 1,4-phénylène; et p, q, et m représentent indépendamment 0 ou 1; et
(3) comme troisième composant, au moins un des composés de formule (III) ou (IV)
R³-(B)-Z²-(C)-R⁴ (III)
dans laquelle R³ et R⁴ représentent indépendamment un groupe alkyle de 1 à 10 atomes de carbone ou un groupe alcényle de 2 à 8 atomes de carbone, dans laquelle un groupe -CH₂- ou deux ou plusieurs groupes -CH₂- peuvent être substitués par -O-; B représente un groupe trans-1,4-cyclohexylène, pyrimidin-2,5-diyle (attaché par la position 2- de celui-ci au groupe Z²) ou 1,4-phénylène; C représente un groupe trans-1,4-cyclohexylène ou 1,4-phénylène; et Z² représente un groupe -C≡C-, -COO-, -CH₂CH₂-, -CH=CH-, -CF=CF- ou une simple liaison; ou
R⁵-(D)-Z³-(E)-Z⁴-(G)-R⁶ (IV)
dans laquelle R⁵ représente un groupe alkyle de 1 à 10 atomes de carbone ou un groupe alcényle de 2 à 10 atomes de carbone, dans laquelle un groupe -CH₂- ou deux ou plusieurs groupes -CH₂- non adjacents entre eux peuvent être substitués par -O-; R⁶ représente un groupe alkyle, un groupe alcoxy ou un groupe alcoxy-méthyle, chacun ayant de 1 à 10 atomes de carbone; D représente un groupe trans-1,4-cyclohexylène ou pyrimidin-2,5-diyle (attaché par la position 2- de celui-ci au groupe Z³); E représente un groupe trans-1,4-cyclohexylène ou 1,4-phénylène dans lequel l'atome d'hydrogène est éventuellement substitué par un atome de fluor à l'une des positions 2-, 3-, 5- et 6- de celui-ci; G représente un groupe trans-1,4-cyclohexylène ou 1,4-phénylène; Z³ représente -CH₂CH₂- ou une simple liaison; et Z⁴ représente un groupe -C≡C-, -COO-, -CH=CH- ou une simple liaison, sous réserve que E et G ne représentent pas en même temps le 1,4-phénylène lorsque D représente le trans-1,4-cyclohexylène et Z³ et Z⁴ représentent tous les deux de simples liaisons.

2. Composition de cristal liquide telle que revendiquée à la revendication 1 dans laquelle le premier composant représente de 3 à 50% en poids, le second composant représente de 10 à 70% en poids et le troisième composant représente de 10 à 70% en poids, sur la base du poids total de la composition de cristal liquide.

3. La composition de cristal liquide telle que revendiquée à la revendication 1 ou 2 qui comprend en outre comme quatrième composant, au moins un des composés de formule (V) ou (VI) 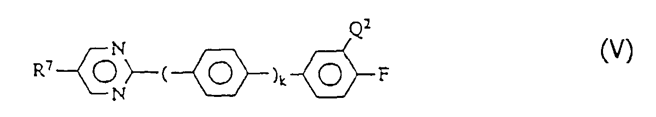 dans laquelle R⁷ représente un groupe alkyle de 1 à 10 atomes de carbone, Q² représente un atome d'hydrogène ou de fluor; et k représente 0 ou 1 ou 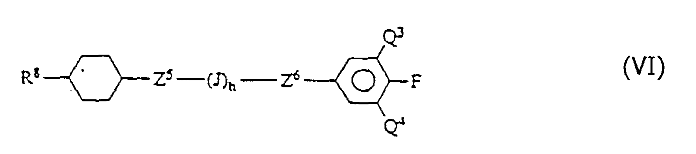 dans laquelle R⁸ représente un groupe alkyle de 1 à 10 atomes de carbone, J représente un groupe trans-1,4-cyclohexylène ou 1,4-phénylène, Q³ et Q⁴ représentent indépendamment un atome d'hydrogène ou de fluor; Z⁵ et Z⁶ représentent indépendamment un groupe -COO- ou une simple liaison; et h représente 0, 1 ou 2.

4. Composition de cristal liquide telle que revendiquée à la revendication 3, dans laquelle le quatrième composant représente de 0 à 50% en poids, sur la base du poids total de la composition de cristal liquide.

5. Composition de cristal liquide telle que revendiquée dans l'une quelconque des revendications 1 à 4, dans laquelle R³ et R⁴ dans la formule (III) représentent indépendamment un groupe alkyle, un groupe alcoxy ou un groupe alcoxyméthyle, chaque groupe ayant de 1 à 10 atomes de carbone.

6. Composition de cristal liquide telle que revendiquée dans l'une quelconque des revendications 1 à 5, dans laquelle R⁵ dans la formule (IV) représente un groupe alkyle de 1 à 10 atomes de carbone, et R⁶ représente un groupe alkyle ou un groupe alcoxy, chaque groupe ayant de 1 à 10 atomes de carbone

7. Élément d'affichage à cristaux liquides qui comprend une composition de cristal liquide telle que revendiquée dans l'une quelconque des revendications 1 à 6.
